# EUROPEAN PATENT APPLICATION

(11) **EP 2 866 131 A1**
(43) Date of publication of application: **29.04.2015**
(21) Application number: 14188835.4
(22) Date of filing: 14.10.2014
(51) Int. Cl.: G06F 3/0483, H04N 1/00, G06F 3/0488

(54) **Mobile terminal and method of controlling the same**

(30) Priority: 23.10.2013 KR 20130126759
(71) Applicant: LG Electronics Inc., Seoul 150-721 (KR)
(72) Inventor: Yoo, Jongseok, 137-893 SEOUL (KR)
(74) Representative: Cabinet Plasseraud

(57) **Abstract**

Provided is a mobile terminal including: a memory in which multiple images are stored, a display unit to which the multiple images (511-519) are output together and a controller for:
- extracting likeness images (511-515) that include a common constituent from the multiple images;
- selecting a representation image (521a) from among the likeness images, based on a predetermined reference;
- limiting outputting of the likeness images that remain after excluding the representation image; and
- outputting the representation image (521a).

## Description

### BACKGROUND OF THE DISCLOSURE

### 1. Field of the Disclosure

The present technology disclosed in the present specification relates to a mobile terminal that is equipped with a display unit to which stored images are selectively output.

### 2. Background of the Disclosure

In general, a terminal may be classified into a mobile (portable) terminal and a stationary terminal according to a moveable state. The mobile terminal may be also classified into a handheld terminal and a vehicle mount terminal according to a user's carriage method.

As functions of the terminal become more diversified, the terminal can support more complicated functions such as capturing images or video, reproducing music or video files, playing games, receiving broadcast signals, and the like. By comprehensively and collectively implementing such functions, the mobile terminal may be embodied in the form of a multimedia player or a device.

Various attempts have been made to implement complicated functions in such a multimedia device by means of hardware or software.

In recent years, a camera built into a mobile terminal has been improved in terms of functions, and various types of storage media have been available for use in the mobile terminal. Thus, the user can store more images in the storage medium in the mobile terminal than before. Accordingly, the storing of the images in large quantities requires a high-capacity memory increasingly, and causes a problem in that other functions of the mobile terminal decrease in performance.

In addition, generally, the images are arranged in the chronological order in which the images are stored or are arranged according to a manner in which the images are stored. Accordingly, the user experiences inconvenience of searching a large quantity of images for a desired image or selecting the desired image from among the large quantity of images.

### SUMMARY OF THE DISCLOSURE

Therefore, an aspect of the detailed description is to group likeness images and provide a user with the images in the group.

To achieve these and other advantages and in accordance with the purpose of this specification, as embodied and broadly described herein, there is provided a mobile terminal including: a memory in which multiple images are stored; a display unit to which the multiple images are output together; extracting likeness images that include a common constituent, from the multiple images; and selecting a representation image from among the likeness images, based on a predetermined reference, and limiting outputting of the likeness images that remain after excluding the representation image.

In the terminal, the common constituent may correspond to at least one, among a state of a photographic subject that is included in each of the multiple images, a state of a background of the photographic subject, and a state of an external environment that serves as the background.

In the terminal, the predetermined reference may include at least one, among quality of each of the likeness images, definition of the photographic subject, and an image forming method.

In the terminal, the controller may designate as a representation image the likeness image that is shared with an external terminal or with a virtual space.

In the terminal, a graphic image indicating that the likeness image being like the representation image is stored in the memory may be output to the display unit along with the representation image.

In the terminal, the graphic image may include an Arabic numeral indicating the number of the likeness images extracted as the likeness images.

In the terminal, based on a first touch input that is applied to the representation image, the controller may enlargedly output the representation image and based on a second touch input that is distinguished from the first touch input, the controller may control the display unit in such a manner that the likeness images are output.

In the terminal, the controller may control the display unit in such a manner that the likeness images are arranged based on the predetermined reference.

In the terminal, the representation image and the likeness images may be output together to the display unit, in such a manner that the likeness images are smaller in size than the representation image.

In the terminal, based on a third touch input that is applied to one among the likeness images that are output, the controller may designate as the representation image one likeness image that is selected.

In the terminal, the memory may include a deletion folder in which the likeness image selected for deletion from among the likeness images is arbitrarily stored, and based on the second touch input, outputting of one or more of the likeness images that are moved to the deletion folder may be limited on the display unit.

In the terminal, the controller may perform control in such a manner that the likeness image that is moved to the deletion folder is stored, and based on a user's control command, the controller may control the memory in such a manner that at least one or more of the likeness images that are stored in the deletion folder are permanently deleted.

In the terminal, if the number of the extracted likeness images exceeds a predetermined reference number, the controller may store in the deletion folder one or more of the likeness images that remains after excluding the likeness images the number of which is the predetermined reference number.

In the terminal, when the likeness image is output to the display unit, based on a fourth touch input that is applied to the display unit, the controller may store in the deletion folder the likeness image that is output.

In the terminal, the controller may perform the display unit in such a manner that an alerting window that includes information indicating that the selected likeness image is deleted is output.

In the terminal, the memory may include a recommendation folder that is configured from at least one of the representation images, and the controller may control the display unit in such a manner that when the recommendation is activated, at least one of the representation images that make up the recommendation folder, is output.

In the terminal, based on the user's control command, the controller may store in the recommendation folder the likeness image that is shared with the external terminal or the virtual space.

The terminal may further include a camera that obtains the image, in which as the image is obtained by the camera, the controller may extract from the memory the likeness image that is like the obtained image.

To achieve these and other advantages and in accordance with the purpose of this specification, as embodied and broadly described herein, there is provided a method of controlling a mobile terminal, including: storing multiple images are stored; outputting the multiple images to the display unit; extracting likeness images that include a common constituent, from the multiple images; and a controller that, based on a predetermined reference, selects a representation image from among the likeness images, and limits outputting of the likeness images that remain after excluding the representation image.

The method may further include deleting one or more of the likeness images from the memory.

According to the present invention, among the images that are determined as the likeness image, only one image is provided to the user. That is, the user is provided with the most desirable representation image without the need to edit the similar images, such as deleting. Accordingly, from the gallery application, the user can be provided at a time with more various images that are stored in the memory.

In addition, because one or more of the likeness images are deleted, a total amount of memory can be used in a more efficient manner and other function can be prevented from decreasing in performance.

Further scope of applicability of the present application will become more apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from the detailed description.

### BRIEF DESCRIPTION OF THE DRAWINGS

The accompanying drawings, which are included to provide a further understanding of the disclosure and are incorporated in and constitute a part of this specification, illustrate exemplary embodiments and together with the description serve to explain the principles of the disclosure.

In the drawings:
FIG. 1 is a block diagram illustrating a mobile terminal, disclosed in the present specification, according to one embodiment of the present invention;
FIGS. 2A and 2B are diagrams, each illustrating a communication system in which the mobile terminal according to the present invention can operate;
FIG. 3A is a perspective diagram illustrating the mobile terminal according to one embodiment of the present invention when viewed from front;
FIG. 3B is a perspective diagram of the mobile terminal illustrated in FIG. 3A when viewed from rear;
FIG. 4 is a flowchart for describing a method of controlling the mobile terminal according to one embodiment of the present invention;
FIGS. 5A and 5B are diagrams for describing the control method in FIG. 4;
FIGS. 6A and 6B are diagrams for selecting a method of selecting a representation image, which reflects user' intention;
FIGS. 7A, 7B 7C, 7D, and 7E are diagrams for describing a control method of outputting an outputting-limited likeness images back;
FIGS. 8A and 8B are diagrams for describing a control method of changing the representation image;
FIGS. 9A, 9B, 9C, 9D, 9E, 9F, and 9G are diagrams for describing various control methods of deleting one portion of a likeness image according to various embodiments.
FIGS. 10A and 10B are diagrams for describing a recommendation folder that is configured from at least one image; and
FIGS. 11A to 11C are diagrams for describing setting of a function associated with extraction of the likeness image while a camera is activated.

### DETAILED DESCRIPTION OF THE DISCLOSURE

Hereinafter, the present disclosure will be explained in more detail with reference to the attached drawings. For the sake of brief description with reference to the drawings, the same or equivalent components will be provided with the same reference numbers, and description thereof will not be repeated. The suffixes "module" and "unit or portion" for components used in the following description merely provided only for facilitation of preparing this specification, and thus they are not granted a specific meaning or function. If it is regarded that detailed descriptions of the related art are not within the range of the present invention, the detailed descriptions will be omitted. Furthermore, it should also be understood that embodiments are not limited by any of the details of the foregoing description, but rather should be construed broadly within its spirit and scope and it is intended that the present invention cover modifications and variations of this invention provided they come within the scope of the appended claims and their equivalents.

A terminal in the present description may include a mobile terminal such as a portable phone, a smart phone, a notebook computer, a digital broadcasting terminal, Personal Digital Assistants (PDA), Portable Multimedia Player (PMP), a navigation system, a slate PC, a tablet PC and an ultra book. However, it will be obvious to those skilled in the art that the present invention may be also applicable to a fixed terminal such as a digital TV and a desktop computer, except for specific configurations for mobility.

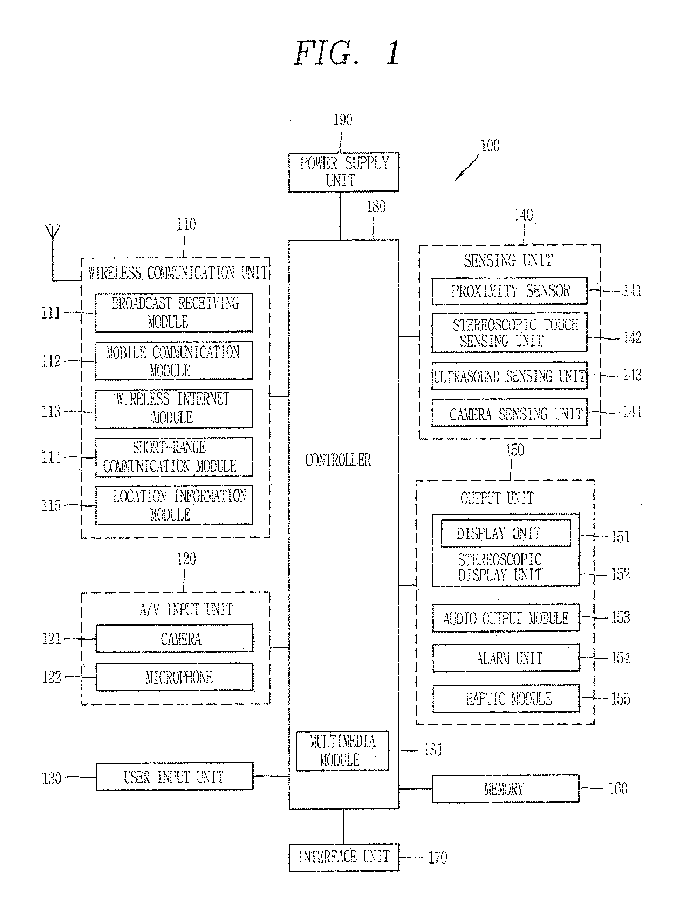

FIG. 1 is a block diagram of a mobile terminal 100 in accordance with one exemplary embodiment.

The mobile terminal 100 may comprise components, such as a wireless communication unit 110, an Audio/Video (A/V) input unit 120, a user input unit 130, a sensing unit 140, an output unit 150, a memory 160, an interface unit 170, a controller 180, a power supply 190 and the like. FIG. 1 shows the mobile terminal 100 having various components, but it is understood that implementing all of the illustrated components is not a requirement. Greater or fewer components may alternatively be implemented.

Hereinafter, each component 110 to 190 is described in sequence.

The wireless communication unit 110 may typically include one or more modules which permit wireless communications between the mobile terminal 100 and a wireless communication system or between the mobile terminal 100 and a network within which the mobile terminal 100 is located. For example, the wireless communication unit 110 may include at least one of a broadcast receiving module 111, a mobile communication module 112, a wireless Internet module 113, a short-range communication module 114, a location information module 115 and the like.

The broadcast receiving module 111 receives a broadcast signal and/or broadcast associated information from an external broadcast managing entity via a broadcast channel.

The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the mobile terminal. The broadcast signal may be implemented as a TV broadcast signal, a radio broadcast signal, and a data broadcast signal, among others. The broadcast signal may further include a data broadcast signal combined with a TV or radio broadcast signal.

Examples of broadcast associated information may include information associated with a broadcast channel, a broadcast program, a broadcast service provider, and the like. The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T) and the like. The broadcast receiving module 111 may be configured to be suitable for every broadcast system transmitting broadcast signals as well as the digital broadcasting systems.

Broadcast signals and/or broadcast associated information received via the broadcast receiving module 111 may be stored in a suitable device, such as a memory 160.

The mobile communication module 112 transmits/receives wireless signals to/from at least one of network entities (e.g., base station, an external mobile terminal, a server, etc.) on a mobile communication network. Here, the wireless signals may include audio call signal, video (telephony) call signal, or various formats of data according to transmission/reception of text/multimedia messages.

The mobile communication module 112 may implement a video call mode and a voice call mode. The video call mode indicates a state of calling with watching a callee's image. The voice call mode indicates a state of calling without watching the callee's image. The wireless communication module 112 may transmit and receive at least one of voice and image in order to implement the video call mode and the voice call mode.

The wireless Internet module 113 supports wireless Internet access for the mobile terminal. This module may be internally or externally coupled to the mobile terminal 100. Examples of such wireless Internet access may include Wireless LAN (WLAN) (Wi-Fi), Wireless Broadband (Wibro), Worldwide Interoperability for Microwave Access (Wimax), High Speed Downlink Packet Access (HSDPA) and the like.

The short-range communication module 114 denotes a module for short-range communications. Suitable technologies for implementing this module may include BLUETOOTH™, Radio Frequency IDentification (RFID), Infrared Data Association (IrDA), Ultra-WideBand (UWB), ZigBee™, Near Field Communication (NFC) and the like.

The location information module 115 denotes a module for detecting or calculating a position of a mobile terminal. An example of the location information module 115 may include a Global Position System (GPS) module or a wireless fidelity (WiFi) module.

Still referring to FIG. 1, the A/V input unit 120 is configured to provide audio or video signal input to the mobile terminal. The A/V input unit 120 may include a camera 121 and a microphone 122. The camera 121 receives and processes image frames of still pictures or video obtained by image sensors in a video call mode or a capturing mode. The processed image frames may be displayed on a display unit 151.

The image frames processed by the camera 121 may be stored in the memory 160 or transmitted to the exterior via the wireless communication unit 110. Also, user's position information and the like may be calculated from the image frames acquired by the camera 121. Two or more cameras 121 may be provided according to the configuration of the mobile terminal.

The microphone 122 may receive an external audio signal while the mobile terminal is in a particular mode, such as a phone call mode, a recording mode, a voice recognition mode, or the like. This audio signal is processed into digital data. The processed digital data is converted for output into a format transmittable to a mobile communication base station via the mobile communication module 112 in case of the phone call mode. The microphone 122 may include assorted noise removing algorithms to remove noise generated in the course of receiving the external audio signal.

The user input unit 130 may generate input data input by a user to control the operation of the mobile terminal. The user input unit 130 may include a keypad, a dome switch, a touchpad (e.g., static pressure/capacitance), a jog wheel, a jog switch and the like.

The sensing unit 140 provides status measurements of various aspects of the mobile terminal. For instance, the sensing unit 140 may detect an open/close status of the mobile terminal, a change in a location of the mobile terminal 100, a presence or absence of user contact with the mobile terminal 100, the location of the mobile terminal 100, acceleration/deceleration of the mobile terminal 100, and the like, so as to generate a sensing signal for controlling the operation of the mobile terminal 100. For example, regarding a slide-type mobile terminal, the sensing unit 140 may sense whether a sliding portion of the mobile terminal is open or closed. Other examples include sensing functions, such as the sensing unit 140 sensing the presence or absence of power provided by the power supply 190, the presence or absence of a coupling or other connection between the interface unit 170 and an external device.

The output unit 150 is configured to output an audio signal, a video signal or a tactile signal. The output unit 150 may include a display unit 151, an audio output module 153, an alarm unit 154 and a haptic module 155.

The display unit 151 may output information processed in the mobile terminal 100. For example, when the mobile terminal is operating in a phone call mode, the display unit 151 will provide a User Interface (UI) or a Graphic User Interface (GUI), which includes information associated with the call. As another example, if the mobile terminal is in a video call mode or a capturing mode, the display unit 151 may additionally or alternatively display images captured and/or received, UI, or GUI.

The display unit 151 may be implemented using, for example, at least one of a Liquid Crystal Display (LCD), a Thin Film Transistor-Liquid Crystal Display (TFT-LCD), an Organic Light-Emitting Diode (OLED), a flexible display, a three-dimensional (3D) display, an e-ink display or the like.

Some of such displays 151 may be implemented as a transparent type or an optical transparent type through which the exterior is visible, which is referred to as 'transparent display'. A representative example of the transparent display may include a Transparent OLED (TOLED), and the like.

The display unit 151 may also be implemented as a stereoscopic display unit 152 for displaying stereoscopic images.

Here, the stereoscopic image may be a three-dimensional (3D) stereoscopic image, and the 3D stereoscopic image is an image refers to an image making a viewer feel that a gradual depth and reality of an object on a monitor or a screen is the same as a reality space. A 3D stereoscopic image is implemented by using binocular disparity. Binocular disparity refers to disparity made by the positions of two eyes. When two eyes view different 2D images, the images are transferred to the brain through the retina and combined in the brain to provide the perception of depth and reality sense.

The stereoscopic display unit 152 may employ a stereoscopic display scheme such as stereoscopic scheme (a glass scheme), an auto-stereoscopic scheme (glassless scheme), a projection scheme (holographic scheme), or the like. Stereoscopic schemes commonly used for home television receivers, or the like, include Wheatstone stereoscopic scheme, or the like.

The auto-stereoscopic scheme includes, for example, a parallax barrier scheme, a lenticular scheme, an integral imaging scheme, a switchable scheme, or the like. The projection scheme includes a reflective holographic scheme, a transmissive holographic scheme, or the like.

In general, a 3D stereoscopic image is comprised of a left image (a left eye image) and a right image (a right eye image). According to how left and right images are combined into a 3D stereoscopic image, the 3D stereoscopic imaging method is divided into a top-down method in which left and right images are disposed up and down in a frame, an L-to-R (left-to-right, side by side) method in which left and right images are disposed left and right in a frame, a checker board method in which fragments of left and right images are disposed in a tile form, an interlaced method in which left and right images are alternately disposed by columns and rows, and a time sequential (or frame by frame) method in which left and right images are alternately displayed by time.

Also, as for a 3D thumbnail image, a left image thumbnail and a right image thumbnail are generated from a left image and a right image of the original image frame, respectively, and then combined to generate a single 3D thumbnail image. In general, thumbnail refers to a reduced image or a reduced still image. The thusly generated left image thumbnail and the right image thumbnail are displayed with a horizontal distance difference therebetween by a depth corresponding to the disparity between the left image and the right image on the screen, providing a stereoscopic space sense.

As illustrated, a left image and a right image required for implementing a 3D stereoscopic image is displayed on the stereoscopic display unit 152 by a stereoscopic processing unit (not shown). The stereoscopic processing unit may receive the 3D image and extract the left image and the right image, or may receive the 2D image and change it into a left image and a right image.

Here, if the display unit 151 and a touch sensitive sensor (referred to as a touch sensor) have a layered structure therebetween (referred to as a 'touch screen'), the display unit 151 may be used as an input device as well as an output device. The touch sensor may be implemented as a touch film, a touch sheet, a touchpad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals are transmitted to a touch controller. The touch controller processes the received signals, and then transmits corresponding data to the controller 180. Accordingly, the controller 180 may sense which region of the display unit 151 has been touched.

Still referring to FIG. 1, a proximity sensor 141 may be arranged at an inner region of the mobile terminal 100 covered by the touch screen, or near the touch screen. The proximity sensor 141 may be provided as one example of the sensing unit 140. The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor.

The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

When a touch sensor is overlaid on the stereoscopic display unit 152 in a layered manner (hereinafter, referred to as 'stereoscopic touch screen'), or when the stereoscopic display unit 152 and a 3D sensor sensing a touch operation are combined, the stereoscopic display unit 152 may also be used as a 3D input device.

As examples of the 3D sensor, the sensing unit 140 may include a proximity sensor 141, a stereoscopic touch sensing unit 142, an ultrasonic sensing unit 143, and a camera sensing unit 144.

The proximity sensor 141 detects the distance between a sensing object (e.g., the user's finger or a stylus pen) applying a touch by using the force of electromagnetism or infrared rays without a mechanical contact and a detect surface. By using the distance, the terminal recognizes which portion of a stereoscopic image has been touched. In particular, when the touch screen is an electrostatic touch screen, the degree of proximity of the sensing object is detected based on a change of an electric field according to proximity of the sensing object, and a touch to the 3D image is recognized by using the degree of proximity.

The stereoscopic touch sensing unit 142 is configured to detect the strength or duration of a touch applied to the touch screen. For example, the stereoscopic touch sensing unit 142 may sense touch pressure. When the pressure is strong, it may recognize the touch as a touch with respect to an object located farther away from the touch screen toward the inside of the terminal.

The ultrasonic sensing unit 143 is configured to recognize position information of the sensing object by using ultrasonic waves.

The ultrasonic sensing unit 143 may include, for example, an optical sensor and a plurality of ultrasonic sensors. The optical sensor is configured to sense light and the ultrasonic sensors may be configured to sense ultrasonic waves. Since light is much faster than ultrasonic waves, a time for which the light reaches the optical sensor is much shorter than a time for which the ultrasonic wave reaches the ultrasonic sensor. Therefore, a position of a wave generation source may be calculated by using a time difference from the time that the ultrasonic wave reaches based on the light as a reference signal.

The camera sensing unit 144 includes at least one of a camera 121, a photo sensor, and a laser sensor.

For example, the camera 121 and the laser sensor may be combined to detect a touch of the sensing object with respect to a 3D stereoscopic image. When distance information detected by a laser sensor is added to a 2D image captured by the camera, 3D information can be obtained.

In another example, a photo sensor may be laminated on the display device. The photo sensor is configured to scan a movement of the sensing object in proximity to the touch screen. In detail, the photo sensor includes photo diodes and transistors at rows and columns to scan content mounted on the photo sensor by using an electrical signal changing according to the quantity of applied light. Namely, the photo sensor calculates the coordinates of the sensing object according to variation of light to thus obtain position information of the sensing object.

The audio output module 153 may convert and output as sound audio data received from the wireless communication unit 110 or stored in the memory 160 in a call signal reception mode, a call mode, a record mode, a voice recognition mode, a broadcast reception mode, and the like. Also, the audio output module 153 may provide audible outputs related to a particular function performed by the mobile terminal 100 (e.g., a call signal reception sound, a message reception sound, etc.). The audio output module 153 may include a speaker, a buzzer or the like.

The alarm unit 154 outputs a signal for informing about an occurrence of an event of the mobile terminal 100. Events generated in the mobile terminal may include call signal reception, message reception, key signal inputs, a touch input etc. In addition to video or audio signals, the alarm unit 154 may output signals in a different manner, for example, using vibration to inform about an occurrence of an event. The video or audio signals may be also outputted via the audio output module 153, so the display unit 151 and the audio output module 153 may be classified as parts of the alarm unit 154.

A haptic module 155 generates various tactile effects the user may feel. A typical example of the tactile effects generated by the haptic module 155 is vibration. The strength and pattern of the haptic module 155 can be controlled. For example, different vibrations may be combined to be outputted or sequentially outputted.

Besides vibration, the haptic module 155 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 155 may be implemented to allow the user to feel a tactile effect through a muscle sensation such as fingers or arm of the user, as well as transferring the tactile effect through a direct contact. Two or more haptic modules 155 may be provided according to the configuration of the mobile terminal 100.

The memory 160 may store software programs used for the processing and controlling operations performed by the controller 180, or may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via the interface unit 170.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

Also, the controller 180 may execute a lock state to restrict a user from inputting control commands for applications when a state of the mobile terminal meets a preset condition. Also, the controller 180 may control a lock screen displayed in the lock state based on a touch input sensed on the display unit 151 in the lock state of the mobile terminal.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein.

Software codes can be implemented by a software application written in any suitable programming language. The software codes may be stored in the memory 160 and executed by the controller 180.

Hereinafter, a communication system which is operable with the mobile terminal 100 according to the present disclosure will be described.

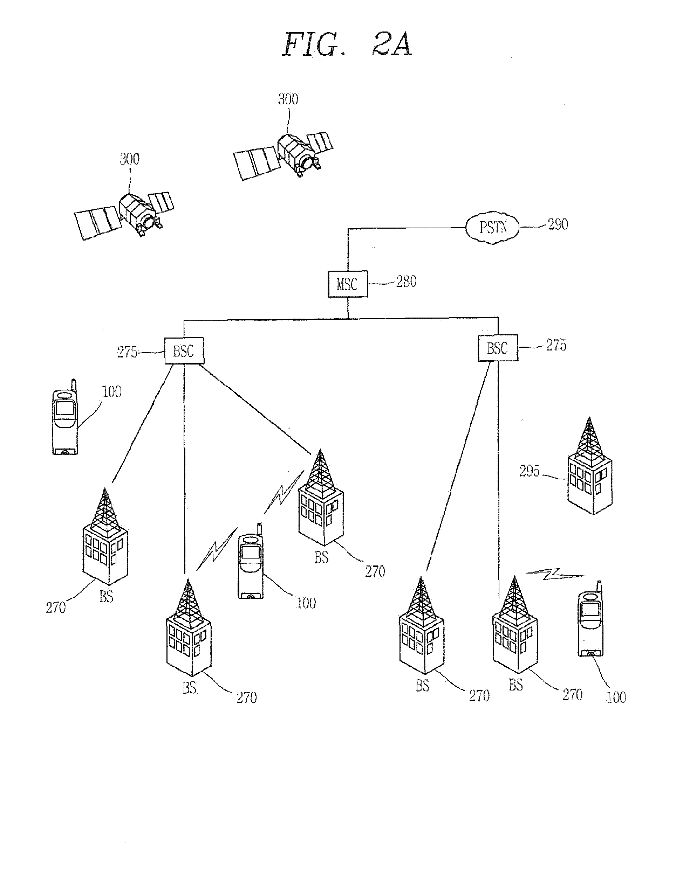

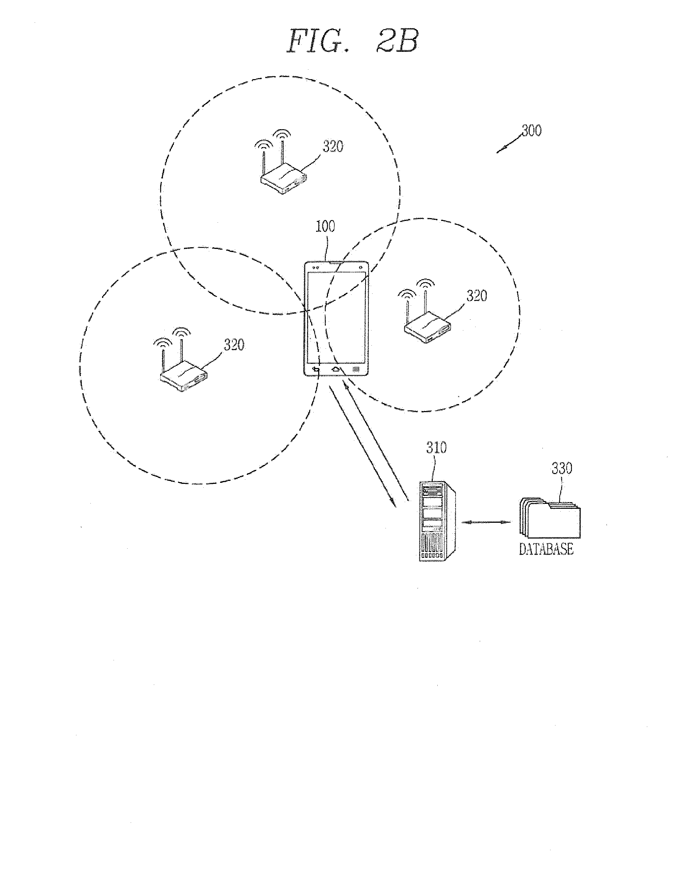

FIGS. 2A and 2B are conceptual views of a communication system operable with a mobile terminal 100 in accordance with the present disclosure.

First, referring to FIG. 2A, such communication systems utilize different air interfaces and/or physical layers. Examples of such air interfaces utilized by the communication systems include Frequency Division Multiple Access (FDMA), Time Division Multiple Access (TDMA), Code Division Multiple Access (CDMA), and Universal Mobile Telecommunications System (UMTS), the Long Term Evolution (LTE) of the UMTS, the Global System for Mobile Communications (GSM), and the like.

By way of non-limiting example only, further description will relate to a CDMA communication system, but such teachings apply equally to other system types including the CDMA wireless communication system.

Referring now to FIG. 2A, a CDMA wireless communication system is shown having a plurality of mobile terminals 100, a plurality of base stations (BSs) 270, base station controllers (BSCs) 275, and a mobile switching center (MSC) 280. The MSC 280 is configured to interface with a conventional Public Switch Telephone Network (PSTN) 290. The MSC 280 is also configured to interface with the BSCs 275. The BSCs 275 are coupled to the base stations 270 via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs 275 can be included in the system as shown in FIG. 2A.

Each base station 270 may include one or more sectors, each sector having an omni-directional antenna or an antenna pointed in a particular direction radially away from the base station 270. Alternatively, each sector may include two or more different antennas. Each base station 270 may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations 270 may also be referred to as Base Station Transceiver Subsystems (BTSs). In some cases, the term "base station" may be used to refer collectively to a BSC 275, and one or more base stations 270. The base stations may also be denoted as "cell sites." Alternatively, individual sectors of a given base station 270 may be referred to as cell sites.

A broadcasting transmitter (BT) 295, as shown in FIG. 2A, transmits a broadcast signal to the mobile terminals 100 operating within the system. The broadcast receiving module 111 (FIG. 1) is typically configured inside the mobile terminal 100 to receive broadcast signals transmitted by the BT 295.

FIG. 2A further depicts several Global Positioning System (GPS) satellites 300. Such satellites 300 facilitate locating the position of at least one of plural mobile terminals 100. Two satellites are depicted in FIG. 2A, but it is understood that useful position information may be obtained with greater or fewer satellites than two satellites. The GPS module 115 (FIG. 1) is typically configured to cooperate with the satellites 300 to obtain desired position information. It is to be appreciated that other types of position detection technology, (i.e., location technology that may be used in addition to or instead of GPS location technology) may alternatively be implemented. If desired, at least one of the GPS satellites 300 may alternatively or additionally be configured to provide satellite DMB transmissions.

During typical operation of the wireless communication system, the base stations 270 receive sets of reverse-link signals from various mobile terminals 100. The mobile terminals 100 are engaging in calls, messaging, and executing other communications. Each reverse-link signal received by a given base station 270 is processed within that base station 270. The resulting data is forwarded to an associated BSC 275. The BSC 275 provides call resource allocation and mobility management functionality including the orchestration of soft handoffs between base stations 270. The BSCs 275 also route the received data to the MSC 280, which then provides additional routing services for interfacing with the PSTN 290. Similarly, the PSTN 290 interfaces with the MSC 280, and the MSC 280 interfaces with the BSCs 275, which in turn control the base stations 270 to transmit sets of forward-link signals to the mobile terminals 100.

Hereinafter, description will be given of a method for acquiring location information of a mobile terminal using a wireless fidelity (WiFi) positioning system (WPS), with reference to FIG. 2B.

The WiFi positioning system (WPS) 300 refers to a location determination technology based on a wireless local area network (WLAN) using WiFi as a technology for tracking the location of the mobile terminal 100 using a WiFi module provided in the mobile terminal 100 and a wireless access point 320 for transmitting and receiving to and from the WiFi module.

The WiFi positioning system 300 may include a WiFi location determination server 310, a mobile terminal 100, a wireless access point (AP) 320 connected to the mobile terminal 100, and a database 330 stored with any wireless AP information.

The WiFi location determination server 310 extracts the information of the wireless AP 320 connected to the mobile terminal 100 based on a location information request message (or signal) of the mobile terminal 100. The information of the wireless AP 320 may be transmitted to the WiFi location determination server 310 through the mobile terminal 100 or transmitted to the WiFi location determination server 310 from the wireless AP 320.

The information of the wireless AP extracted based on the location information request message of the mobile terminal 100 may be at least one of MAC address, SSID, RSSI, channel information, privacy, network type, signal strength and noise strength.

The WiFi location determination server 310 receives the information of the wireless AP 320 connected to the mobile terminal 100 as described above, and compares the received wireless AP 320 information with information contained in the pre-established database 330 to extract (or analyze) the location information of the mobile terminal 100.

On the other hand, referring to FIG. 2B, as an example, the wireless AP connected to the mobile terminal 100 is illustrated as a first, a second, and a third wireless AP 320. However, the number of wireless APs connected to the mobile terminal 100 may be changed in various ways according to a wireless communication environment in which the mobile terminal 100 is located. When the mobile terminal 100 is connected to at least one of wireless APs, the WiFi positioning system 300 can track the location of the mobile terminal 100.

Next, considering the database 330 stored with any wireless AP information in more detail, various information of any wireless APs disposed at different locations may be stored in the database 330.

The information of any wireless APs stored in the database 330 may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like.

In this manner, any wireless AP information and location information corresponding to the any wireless AP are stored together in the database 330, and thus the WiFi location determination server 310 may retrieve wireless AP information corresponding to the information of the wireless AP 320 connected to the mobile terminal 100 from the database 330 to extract the location information matched to the searched wireless AP, thereby extracting the location information of the mobile terminal 100.

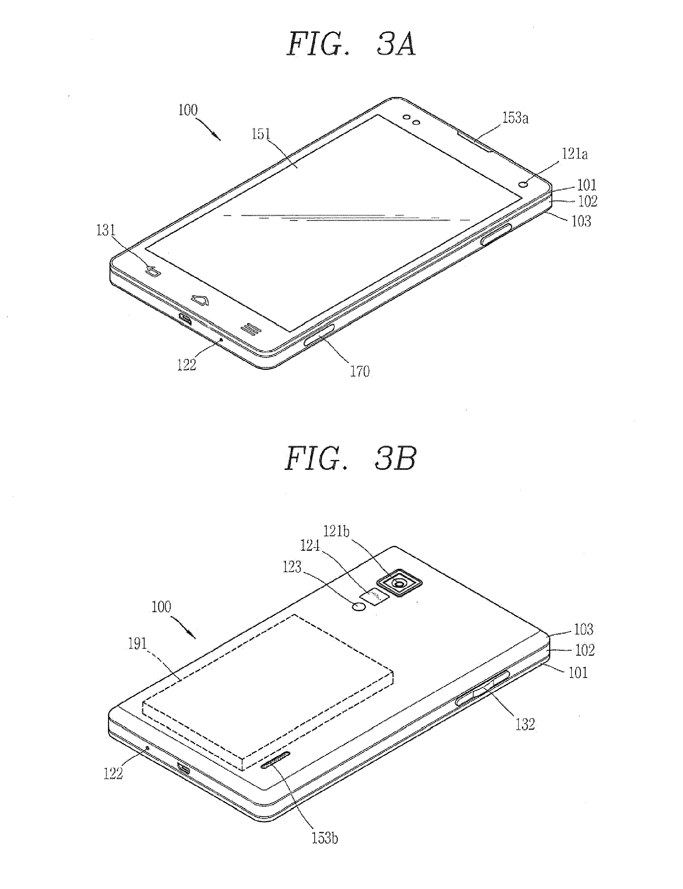

FIG. 3A is a front perspective view of the mobile terminal 100 according to an embodiment of the present invention.

The mobile terminal 100 according to the present disclosure is a bar type mobile terminal. However, the present disclosure is not limited to this, but may be applied to a watch type, a clip type, a glasses type, or a slide type in which two or more bodies are coupled to each other so as to perform a relative motion, a folder type, or a swing type, a swivel type and the like.

A case (casing, housing, cover, etc.) forming an outer appearance of the body may include a front case 101 and a rear case 102. A space formed by the front case 101 and the rear case 102 may accommodate various components therein. At least one intermediate case may further be disposed between the front case 101 and the rear case 102. A battery cover 103 for covering a battery 191 may be detachably mounted to the rear case 102.

Such cases may be formed by injection-molded synthetic resin, or may be formed using a metallic material such as stainless steel (STS) or titanium (Ti).

At the front case 101, may be disposed a display unit 151, a first audio output unit 153a, a first camera 121 a, a first user input unit 131, etc. On the side surfaces, may be disposed a microphone 122, an interface unit 170, a second user input unit 132, etc.

The display unit 151 may output information processed in the mobile terminal 100. The display unit 151 may be implemented using, for example, at least one of a Liquid Crystal Display (LCD), a Thin Film Transistor-Liquid Crystal Display (TFT-LCD), an Organic Light-Emitting Diode (OLED), a flexible display, a three-dimensional (3D) display, an e-ink display or the like.

The display unit 151 may include a touch sensing means to receive a control command by a touch method. When a touch is made to any one place on the display unit 151, the touch sensing means may be configured to sense this touch and enter the content corresponding to the touched place. The content entered by a touch method may be a text or numerical value, or a menu item capable of indication or designation in various modes.

The touch sensing means may be formed with transparency to allow visual information displayed on the display unit 151 to be seen, and may include a structure for enhancing the visibility of a touch screen at bright places. Referring to FIG. 3A, the display unit 151 occupies a most portion of the front surface of the front case 101.

The first audio output unit 153a and the first camera 121 a are disposed in a region adjacent to one of both ends of the display unit 151, and the first manipulation input unit 131 and the microphone 122 are disposed in a region adjacent to the other end thereof. The second manipulation interface 132 (refer to FIG. 3B), the interface 170, and the like may be disposed on a lateral surface of the terminal body.

The first audio output module 153a may be implemented in the form of a receiver for transferring voice sounds to the user's ear or a loud speaker for outputting various alarm sounds or multimedia reproduction sounds.

It may be configured such that the sounds generated from the first audio output module 153a are released along an assembly gap between the structural bodies. In this case, a hole independently formed to output audio sounds may not be seen or hidden in terms of appearance, thereby further simplifying the appearance of the mobile terminal 100. However, the present invention may not be limited to this, but a hole for releasing the sounds may be formed on the window.

The first camera 121 a processes video frames such as still or moving images obtained by the image sensor in a video call mode or capture mode. The processed video frames may be displayed on the display unit 151.

The user input unit 130 is manipulated to receive a command for controlling the operation of the mobile terminal 100. The user input unit 130 may include a first and a second manipulation unit 131, 132. The first and the second manipulation unit 131, 132 may be commonly referred to as a manipulating portion, and any method may be employed if it is a tactile manner allowing the user to perform manipulation with a tactile feeling such as touch, push, scroll or the like.

In the present drawing, it is illustrated on the basis that the first manipulation unit 131 is a touch key, but the present disclosure may not be necessarily limited to this. For example, the first manipulation unit 131 may be configured with a mechanical key, or a combination of a touch key and a mechanical key.

The content received by the first and/or second manipulation units 131, 132 may be set in various ways. For example, the first manipulation unit 131 may be used to receive a command such as menu, home key, cancel, search, or the like, and the second manipulation unit 132 may receive a command, such as controlling a volume level being outputted from the first audio output module 153a, or switching into a touch recognition mode of the display unit 151.

The microphone 122 may be formed to receive the user's voice, other sounds, or the like. The microphone 122 may be provided at a plurality of places, and configured to receive stereo sounds.

The interface unit 170 serves as a path allowing the mobile terminal 100 to exchange data with external devices. For example, the interface unit 170 may be at least one of a connection terminal for connecting to an earphone in a wired or wireless manner, a port for near field communication (for example, an Infrared Data Association (IrDA) port, a Bluetooth port, a wireless LAN port, and the like), and a power supply terminal for supplying power to the mobile terminal 100. The interface unit 170 may be implemented in the form of a socket for accommodating an external card such as Subscriber Identification Module (SIM) or User Identity Module (UIM), and a memory card for information storage.

FIG. 3B is a rear perspective view illustrating mobile terminal 100 illustrated in FIG. 3A.

Referring to FIG. 3B, a second camera 121b may be additionally mounted at a rear surface of the terminal body, namely, the rear case 102. The second camera 121 b has an image capturing direction, which is substantially opposite to the direction of the first camera unit 121 a (refer to FIG. 3A), and may have a different number of pixels from that of the first camera unit 121 a.

For example, it is preferable that the first camera 121 a has a relatively small number of pixels enough not to cause difficulty when the user captures his or her own face and sends it to the other party during a video call or the like, and the second camera 121b has a relatively large number of pixels since the user often captures a general object that is not sent immediately. The first and the second camera 121 a, 121 b may be provided in the terminal body in a rotatable and popupable manner.

Furthermore, a flash 123 and a mirror 124 may be additionally disposed adjacent to the second camera 121b. The flash 123 illuminates light toward an object when capturing the object with the second camera 121 b. The mirror 124 allows the user to look at his or her own face, or the like, in a reflected way when capturing himself or herself (in a self-portrait mode) by using the second camera 121 b.

A second audio output unit 153b may be additionally disposed at a rear surface of the terminal body. The second audio output unit 153b together with the first audio output unit 153a (refer to FIG. 3A) can implement a stereo function, and may be also used to implement a speaker phone mode during a phone call.

An antenna (not shown) for receiving broadcast signals may be additionally disposed at a lateral surface of the terminal body in addition to an antenna for making a phone call or the like. The antenna constituting part of the broadcast receiving module 111 (refer to FIG. 1) may be provided in the terminal body in a retractable manner.

A power supply unit 190 (refer to FIG. 1) for supplying power to the mobile terminal 100 may be mounted on the terminal body. The power supply unit 190 may be incorporated into the terminal body, or may include a battery 191 configured in a detachable manner on the outside of the terminal body. According to the drawing, it is illustrated that the battery cover 103 is combined with the rear case 102 to cover the battery 191, thereby restricting the battery 191 from being released and protecting the battery 191 from external shocks and foreign substances.

The mobile terminal according to the present invention stores at least one image, based on a user's control command. The images are stored in memory space in the memory 160. For example, the use run a gallery application in order to output the stored images. When the gallery application is run, the multiple images that are stored are output together on the display unit. In addition, based on a user's touch input that is applied to the display unit, the controller performs control in such a manner that the selected image is output in a large size or is output in a small size to allow for the concurrent outputting of more images.

On the other hand, the controller controls the display unit in such a manner that the images are arranged based on the date and time each of the images is stored. Based on a control command that is applied by the user, the controller creates at least one image holder including the multiple images. The mobile terminal according to the present invention extracts multiple images that are recognized to have the likeness and creates one group of images that has the likeness. In addition, only one image among the multiple images that make up the group is selectively output to the display unit. A control method is described below in which the outputting of the images that remain after excluding one image from the multiple images that are recognized to have the likeness is limited and the remaining images are output in a more simply arranged manner.

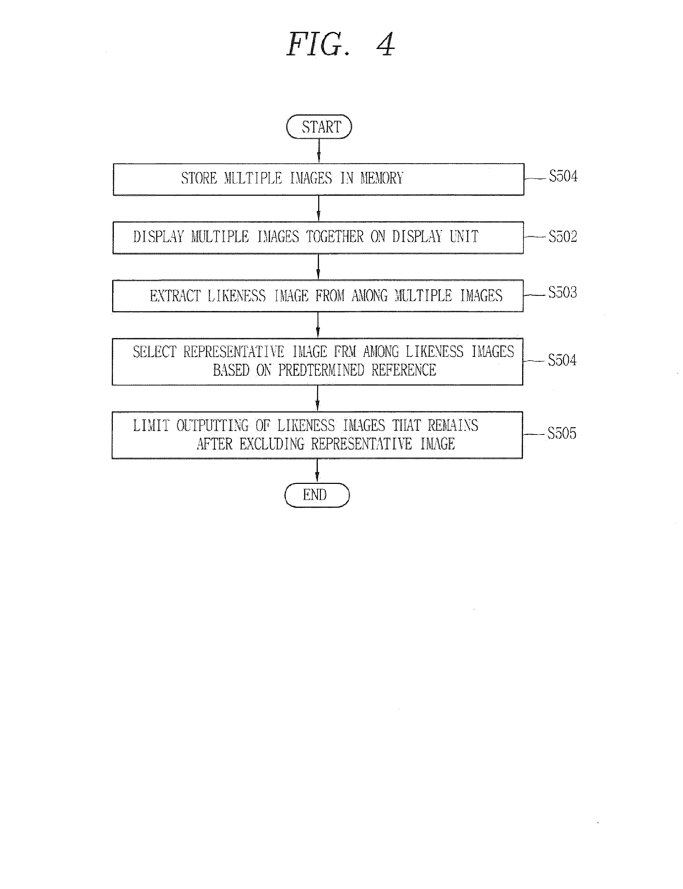

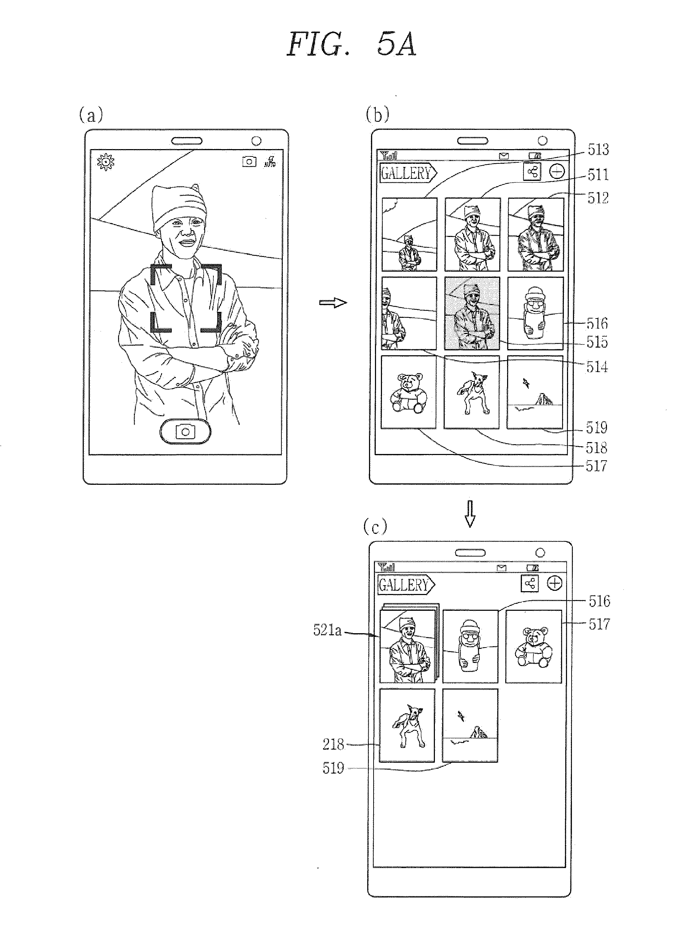

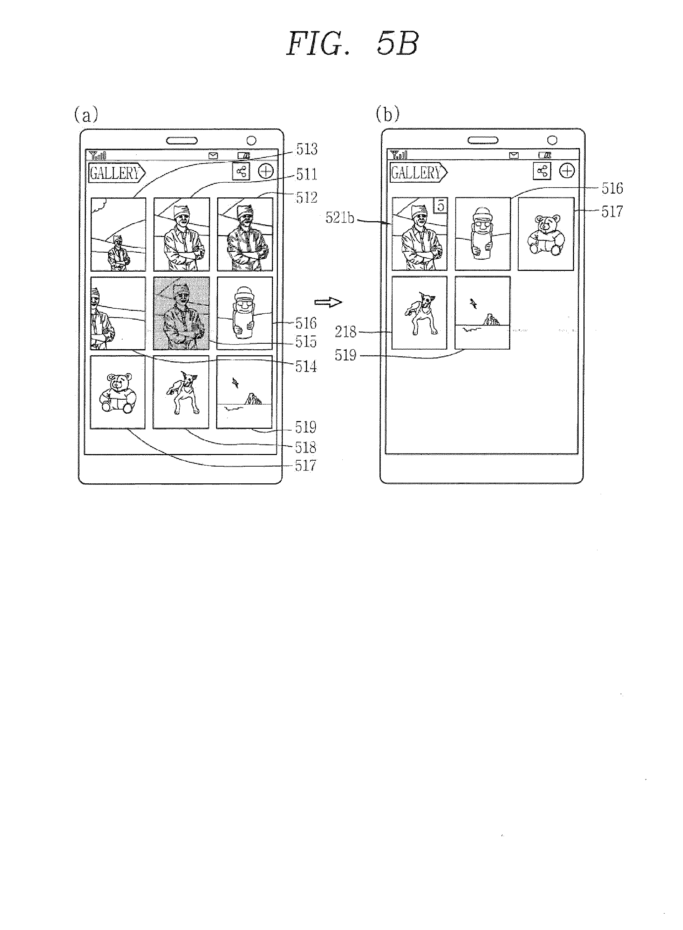

FIG. 4 is a flowchart for describing a method of controlling the mobile terminal according to one embodiment of the present invention. FIG. 5 is a diagram for describing the control method in FIG. 4 according to one embodiment.

The user stores the multiple images in the memory 160 (S501). There is no limit to the type of image. For example, the image corresponds to an image that results from storing (that is, capturing) screen information, as is, that is output to the display unit, an image that results from storing a photograph or a picture that is included in a web page, screen information on one image among images that are output and that make up a moving image that is being reproduced, a picture file and a wall paper that are provided from a communications carrier for the mobile terminal and are already stored, and the like.

In addition, as illustrated in FIGS. 5A(a) to 5A(c), the image corresponds to an image that is obtained by the camera 121. When a camera application is activated, the controller activates the camera 121, and control the camera 121 in such a manner that an external environment is photographed. The controller obtains an image of the external environment that is captured based on a photographing control command which is applied by the user. In addition, the controller stores the image directly in the memory 160, based on setting, or stores the image in the memory 160, based on a user's additional control command.

Referring to FIG. 5A(b), the controller outputs an execution screen of the gallery application. The multiple images are output on the execution screen on the display unit (S502). As illustrated in the drawings, the nine images may be output together on the execution screen. In addition, based on the touch input that is applied by the user, other multiple images are output on the display unit. In addition, on the display unit, based on a user's type of touch input, the number of the images that are output together on the display unit is changed, or each of the multiple images is changed.

That is, first to ninth images 511, 512, 513, 514, 515, 516, 517, 518, and 519 are output together to the display unit. The multiple images are arranged in chronological order in which they are obtained by the camera (or in which they are stored based on another control command) but are not limited to this arrangement.

When the multiple images are stored in the memory 160, an extraction unit (not illustrated) extracts likeness images from the multiple images (S503). The likeness images here mean images that include the common constituent. That is, the extraction unit compares the multiple images stored in the memory 160 and extracts the likeness images that includes a common region.

The extraction unit analyzes images that are included in each of the multiple images. For example, the extraction unit extracts, from the multiple images, multiple photographs that has the common constituent that makes up each of the multiple images, such as a photographic subject that makes up each of the multiple images, a place corresponding to an external environment (background) of the photographic subject, a person or an object that is included in each of the multiple images, a time period (night, night, or the like) corresponding to the background, a state (transformed or not) of the person or of the place, or the time each of the multiple images is obtained (stored).

For example, the images that include at least one common constituent correspond to the multiple photographs that are obtained at the same place. Referring to FIG. 5A(b), the extraction unit extracts as first to fifth likeness images the first to fifth images 511, 512, 513, 514, and 514 that has the same external environment.

The extraction unit extracts as the likeness image the image that includes at least two or more common constituents. For example, if it is determined that the image includes substantially the same external environment and substantially the same person, the extraction unit extracts the first to fifth images 511, 512, 513, 514, and 515 as the first to fifth likeness images 521, 522, 523, 524, and 525.

The controller 180 selects one image, as a representation image, from among the likeness images according to a predetermined reference (S504). No limitation is imposed on the predetermined reference here.

For example, the controller analyzes the multiple likeness images. The controller analyzes the constituents (the external environment, the person, the object, and the like as described above that make up the likeness image, quality (resolution, definition, and the like) of the formed image, and an image forming method (an image processing technology. an image storing method). Based on property of the analyzed likeness image, the controller selects at least one representation image.

For example, the controller selects the likeness image that is highest in resolution as the representation image. In addition, the predetermined reference is configured from multiple references. That is, the controller selects as the representation image that is high in resolution and in which the person is expressed with high definition with the persons included in the likeness image being in focus.

A step of selecting the representation image is performed regardless of the user's control command that is applied to the mobile terminal. In addition, if multiple images are captured by the camera 121 for a predetermined time, without being subject to the user's control command, the controller analyzes the multiple images for the predetermined time and selects the representation image from among the likeness images.

In addition, based on the chronological order in which the images are obtained, the controller selects the image that is stored first or last, as the representation image, from among the likeness images.

Referring to FIG. 5A(c), the controller selects as the representation image a first likeness image 521 in which the objects that are included in the likeness images are all expressed with high definition. The controller controls the display unit in such a manner that the outputting of the images (that is, second to fifth likeness images 522, 523, 524, and 525) that remain after excluding the first likeness image 521 (S505) is limited.

The controller controls the display unit in such a manner that the sixth to ninth images 516, 517, 518, and 519 that are not extracted as the likeness images and the first likeness image 521 are output as the representation images. However, the second likeness image is output to the display unit, as a first representation image 521a in the changed form, in such a manner that the second likeness image represents the second to fifth likeness images 522, 523, 524, and 525. The first representation image 521 a has the form in which the multiple likeness images following the second likeness image are horizontally piled on top of each other. That is, the first representation image 521 a is designed in appearance to correspond to a group of likeness images, not one image.

The number of the multiple images that are horizontally piled on top of each other corresponds to the number of the outputting-limited likeness images, but is not limited to the number of the outputting-limited likeness images. For example, in order to alert the user that the multiple likeness images are present, the first representation image 521 a is realized on the display unit, in the form in which sheets of paper (for example, 3 sheets of paper) of which the number is predetermined are horizontally piled on top of each other due to spatial limitation.

Because the outputting of the second to fifth likeness images 522, 523, 524, and 525 are limited, an arrangement of the first representation image 521 a and the sixth to ninth images 516, 517, 518, and 519 is changed on the display unit.

In addition, on the gallery application, without performing a step of outputting all of the first to fifth images 511, 512, 513, 514, and 515, the controller stores the images and at the same time extracts the likeness image, selects the representation image, and thus limits the outputting of the extracted likeness images that remain after one extracted likeness image is selected as the representation image. For example, when the first image 511 is stored and then the second image 512 is stored, the controller analyzes whether the second image is like the first image 511. When the first and second images 511 and 512 are like each other, the controller limits the outputting of either of the first and second images 511 and 512. Alternatively, when a predetermined likeness image is stored, the controller selects the representation image.

In addition, the execution screen of the gallery application, which includes only at least one representation image is illustrated in the drawings, but if the multiple likeness images that include different common constituents are stored in the memory 160, the multiple representation images are output on the execution screen.

According to the present invention, among the images that are determined as the likeness image, only one image is provided to the user. That is, the user can be provided with the most desirable representation image without the need to edit the like images, such as deleting.

Accordingly, from the gallery application, the user can be provided at a time with more various images that are stored in the memory.

The representation image that is realized as having another form is described referring to FIG. 5B(a) and 5B(b).

The controller limits the outputting of the likeness images that remain after excluding the first likeness image 511. A second representation image 521 b that includes an Arabic numeral indicating the number of the outputting-limited likeness images is output on the first likeness image 511 on the display unit.

Accordingly, the representation image representing the multiple images is displayed on the display unit, without affecting a layout in which the multiple images and other multiple images that are output together with the multiple images are arranged. In addition, the user can conveniently check how many of the likeness images are stored in the memory 160 along with the likeness image 521.

The control method is described above in which the representation image is selected according to a predetermined reference without involving the user. A method of selecting the representation image is described below which reflect user's intention.

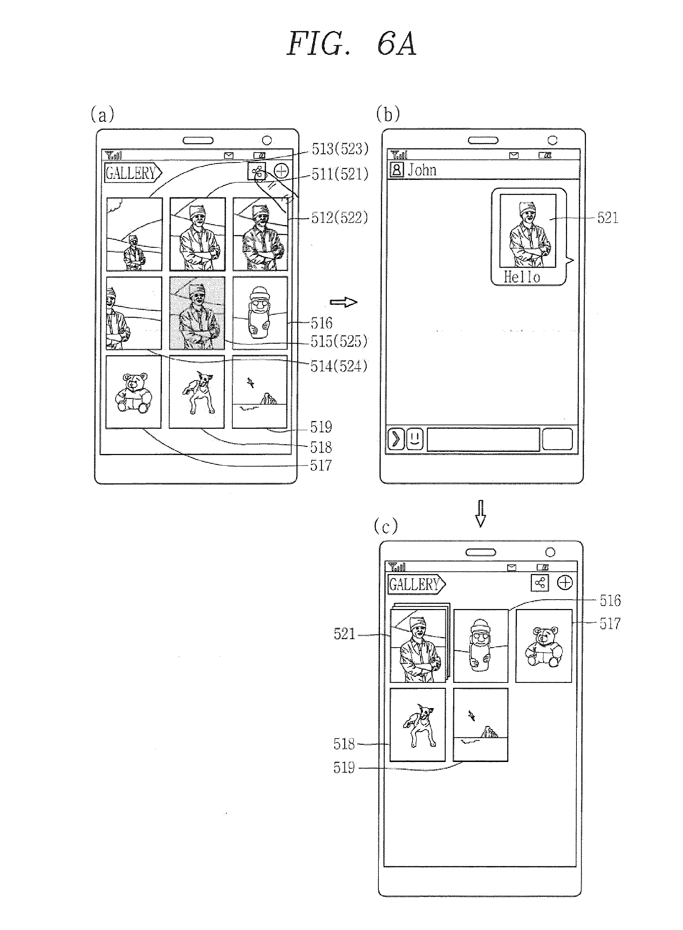

FIGS. 6A(a) and 6A(c) and 6B(a) to 6B(c) are diagrams for selecting the method of selecting the representation image, which reflects the user' intention.

Referring to FIGS. 6A(a) and 6(b), the controller shares at least one image that is selected by a user' touch input. The sharing here corresponds to transmitting an image selected by the user to an external terminal in a data format (for example, transmitting using a text message, transmitting using a chatting application, designating as an image of the user during an image communication call), uploading to a web site, copying to a virtual space, or the like.

The controller controls the wireless communication unit 110 in such a manner that the first image 511 which is selected from among the first to fifth images 511, 512, 513, 514, and 515 arranged on the execution screen of the gallery application is transmitted to the external terminal. That is, the user can transmit an image to the external terminal by selecting the image and activating a message application.

The extraction unit extracts the multiple likeness images from the multiple images that are stored in the memory 160. However, the controller performs a step of extracting the likeness image before or after a step of sharing at least one image.

The controller transmits the first image 511 to the external terminal (JOHN) and then selects the first likeness image 521, as the first representation image 521, from among the first to fifth likeness images 521, 522, 523, 524, and 525 that are extracted in such a manner as to include the first image 511.

The controller controls the display unit in such a manner that the outputting of the second to fifth likeness images 522, 523, 524, and 525 are limited.

Although not illustrated in the drawings, if two or more images, among the multiple likeness images, are shared, the controller selects the representation image from among the multiple shared likeness images according to a predetermined reference.

Generally, the user shares an image valuable to him/her among the multiple likeness images. That is, a likelihood that an image of which deletion is desirable or that is unnecessary will be shared is small. If the image is shared, the controller regards a shared image, among the likeness images, as the most valuable picture to the user, and thus selects the representation image reflecting the user's intention. Accordingly, the user can be provided with the image that the user thinks is the valuable image, as the representation image, on the execution screen of the gallery application.

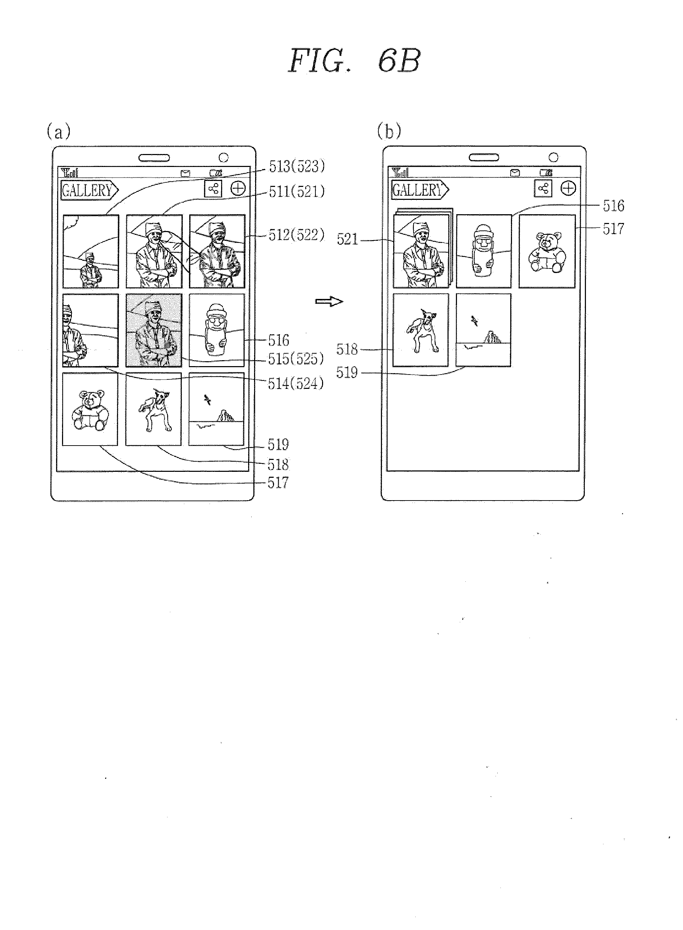

A control method of selection the representation image based on the user's direct touch input is described Referring to FIGS. 6B(a) and 6B(b). The controller selects as the representation image an image to which the user's touch input is applied, from among the multiple images.

As illustrated in the drawings, if the likeness images are extracted from the multiple stored images, the controller performs highlight processing on the likeness images in such a manner that the extracted likeness images are indicated on the display unit.

The user can apply the touch input to one image among the indicated likeness images. However, the control method of selecting the representation image is not limited to this, but the likeness images that include the constituent in common with one image to which, among the multiple images, the touch input is applied, may be extracted from the multiple images that are stored in the memory 160.

The controller selects as the representation image 521 the image to which the touch input is applied, and controls the display unit in such a manner that the representation image 521 is output along with the sixth to ninth images 516, 517, 518, and 519.

In addition, if the touch input is applied to a first image 511 before the likeness images are extracted, the controller extracts the likeness image that includes at least one constituent in common with the first image 511, from the multiple images that are stored in the memory 160, and limits the outputting of the extracted likeness images.

Accordingly, the user can the image selected by the user from among the multiple images is selected as the representatvie image representing the likeness images.

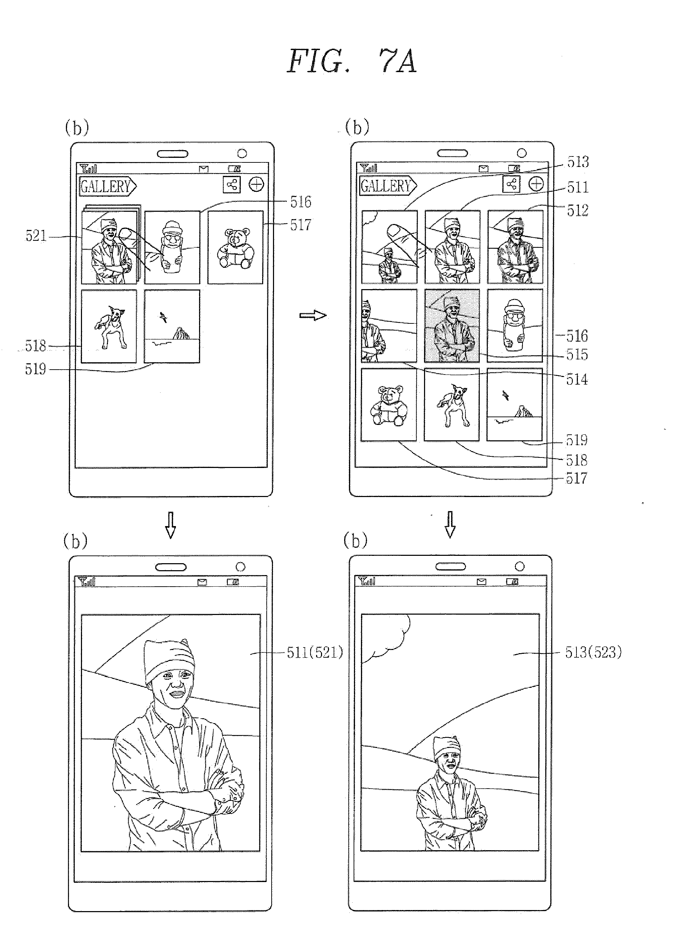

FIGS. 7A(a) to 7A(d), 7B(a) and 7B(b), 7C(a) to 7C(c), 7D(a) to 7D(d), and 7E(a) to 7E(c) are diagrams for describing a control method of outputting the outputting-limited likeness images back. When a predetermined command is applied, the controller controls the display unit in such a manner that the outputting-restricted likeness images are output back. Various methods of outputting the likeness images back, according to various embodiments, are described below.

Referring to FIG. 7A(a) to 7A(d), a control method is described in which one, among the likeness images, is output based on different-type touch inputs that are applied to the representation image 521.

As described in FIG. 7A(a), the representation image 521 and the sixth to ninth images 516, 517, 518, and 519 are output together to the display unit. Referring to FIGS. 7A(a) and 7A(c), based on first touch input that is applied to the representation image 521, the controller controls the display unit in such a manner that the representation image 521 is enlargedly output. That is, only the representation image 521 is output to all regions of the display unit.

In addition, although not illustrated in the drawings, when the first touch input is applied to one, among the sixth to ninth images 516, 517, 518, and 519, the one image is output on all regions of the display unit.

Referring to 7A(a) and 7A(b), based on a second touch input that is applied to the representation image 521, the controller controls the display unit in such a manner that the likeness images associated with the representation image 521 are output. That is, based on the second touch input, the controller controls the display unit in such a manner that the outputting-restricted second to fifth likeness images 522, 523, 524, and 525 are output. The second to fifth likeness images 522, 523, 524, and 525 are output along with the sixth to ninth images 516, 517, 518, and 519.

In addition, the controller controls the display unit in such a manner that the sixth to ninth images 516, 517, 518, and 519 are arranged using a different arrangement method along with the likeness images. For example, if at least one image, among the likeness images, is stored anywhere between the time the six image 516 is obtained and the time that the seventh image 517 is obtained, the one image is displayed after the sixth image 516.

At this point, the first and second touch inputs are applied in a distinguished touch manner. For example, the second touch input corresponds to a long touch-type touch input that is applied to the representation image 521 for a predetermined time. The first touch input corresponds to a touch input that is applied to the representation image for a short period of time.

In addition, referring to FIG. 7A(b) to 7A(c), based on the touch input that is applied to one among the second to fifth likeness images 522, 523, 524, and 525 that are output, the controller enlarges one likeness image selected from among the likeness images and thus outputs the one enlarged likeness image.

That is, by applying the touch input to the representation image in a different manner, the user can be provided with only the enlarged representation image or be provided back with the likeness images associated with the representation image.

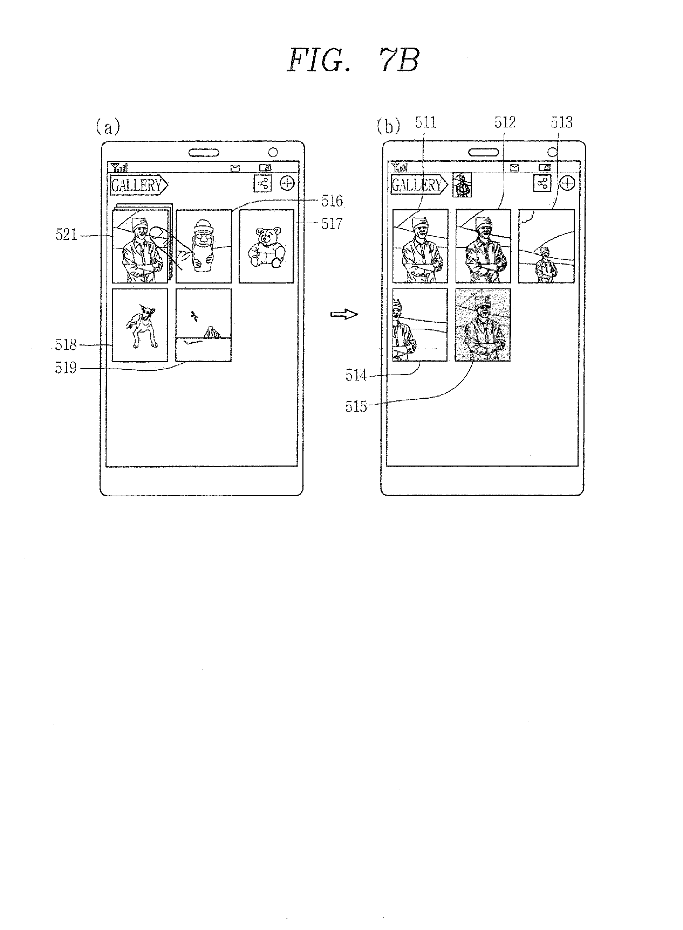

An image provision method of outputting only different likeness images to the representation image is described referring to FIGS. 7B(a) to 7B(b). Based on the touch input that is applied to the representation image 521, the controller controls the display unit in such a manner that only the likeness images are output. The likeness images are output together to the display unit. In addition, the controller controls the display unit in such a manner that the representation image 521 is output along with the likeness images 522, 523, 524, and 525.

In addition, the controller controls the display unit in such a manner that the likeness images 522, 523, 524, and 525 are arranged according to a predetermined reference. For example, the controller arranges the likeness images 522, 523, 524, and 525 in the order in which the person that is the constituent of each of the likeness images 522, 523, 524, and 525 is obtained with high definition. Referring to 7B(b), on the display unit, the first image 511 in which the person is shown with highest definition and in a large size is arranged first and the fifth image 525 that is obtained in a dimmest state is arranged last. However, the reference is not limited to this definition order, but may be changed by user's setting. For example, the reference corresponds to brightness, definition, or the like of the entire image.

Accordingly, the user can be provided back with the likeness images associated with the representation image 521. Furthermore, because the likeness images are output to a space that is distinguished from the space for the other images, the user can check the likeness images in a more convenient manner.

In addition, the user can be provided with the multiple images that are arranged according to a predetermined reference.

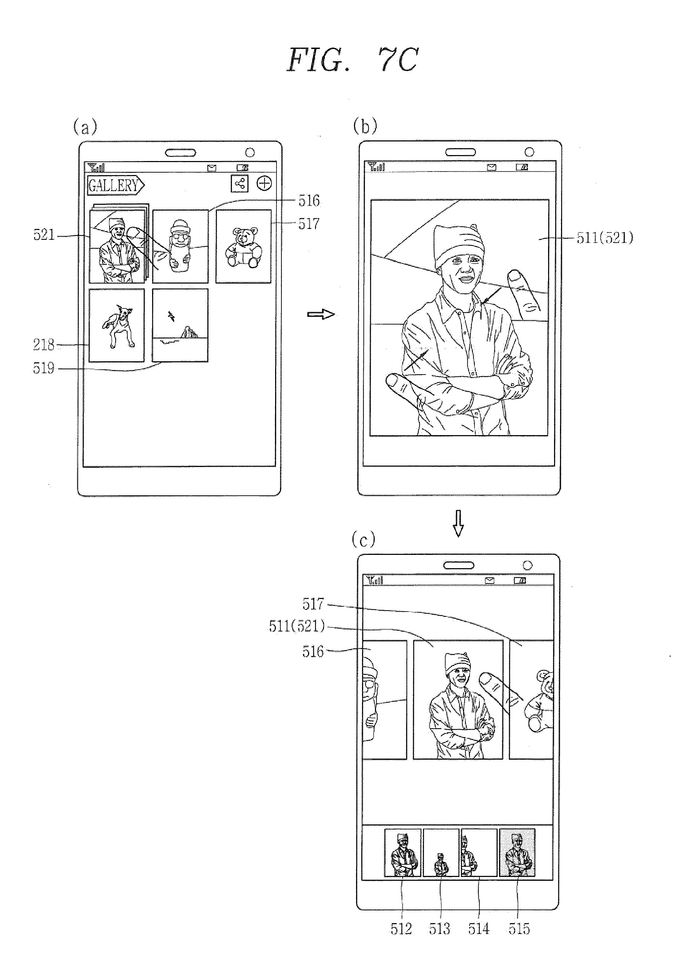

A control method of outputting the likeness images, according to another embodiment, is described referring to FIGS. 7C(a) to 7C(c). Referring to FIGS. 7C(a) and 7C(b), based on the touch input hat is applied to the first likeness image 521, the controller controls the display unit in such a manner that the first likeness image 521 is enlargedly output.

The touch input here corresponds to a pinch-out type touch input in which two touch points to which the touch is applied are dragged close to each other.

Based on the touch input that is applied to the display unit in a state where the first likeness image 521 is output, the controller changes the size in which the first likeness image 521 is output. In addition, the display unit outputs the first to fifth likeness images 522, 523, 524, and 525 along with the first likeness image 521.

That is, the controller outputs the first likeness image 521 in a reduced size, and outputs the other images in a manner that arranges them in parallel with the first likeness image 521. Based on the continuous touch input that is applied to the display unit, the controller controls the display unit in such a manner that one among the other images is displayed on the center of the display unit.

The controller controls the display unit in such a manner that the second to fifth likeness images 522, 523, 524, and 525 are output in reduced form (in a thumbnail view format). The second to fifth likeness images 522, 523, 524, and 525 are output to a lower portion of the first likeness image 521 in such a manner that the size of each of the second to fifth likeness images 522, 523, 524, and 525 is smaller than that of the first likeness image 521.

In addition, when instead of the first likeness image 511, with the continuous touch input, one, among the other images, is output to the center of the display unit, the controller controls the display unit in such a manner that the outputting of the second to fifth likeness images 522, 523, 524, and 525 are limited.

Although not illustrated in the drawings, if multiple different groups of likeness images are formed and the representation images are output to the display unit, the controller control the display unit in such a manner that the likeness images associated with one representation image that is output on the center of the display unit are output in the thumbnail view format.

Accordingly, the user can be sequentially provided with the other images and the representation image. Furthermore, only if the image that is output to the display unit is the representatvie image representing the other likeness images, the user can be provided with the likeness images.

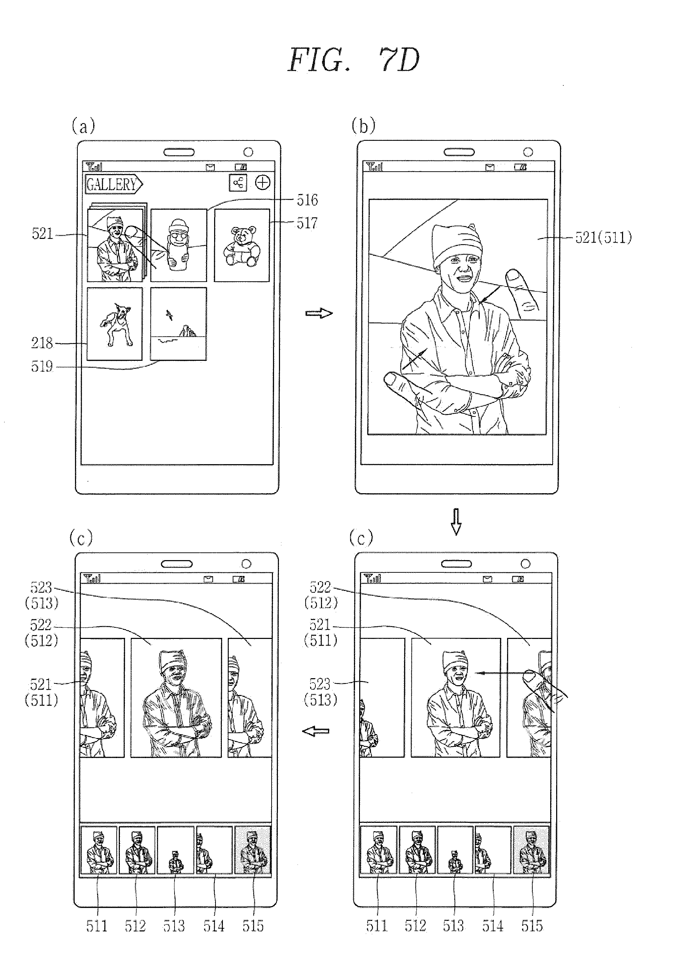

A control method of outputting the likeness images, according to another embodiment, is described referring to FIGS. 7D(a) to 7D(d). Based on the touch input that is applied to the representation image 521, the controller enlarges the representation image and thus output the enlarged representation image to the display unit.

While the representation image 521 is output on all regions of the display unit, based on the touch input that is applied to the display unit, the controller controls the display unit in such a manner that the likeness images that are like the representation image 521 are output.

Referring to FIG. 7D(c), based on the touch input, the controller controls the display unit in such a manner that the size of the representation image 521 is reduced and the size-reduced representation image 521 is output on the center of the display unit. In addition, two images, among the likeness images that are like the representation image, are output to both sides of the representation image 521 on the display unit, respectively. However, one portion of each of the two images is output to the display unit. For example, the controller outputs the first image 511 to the center of the display unit and outputs the third to third likeness images 522 and 523 to both sides of the first image 511, respectively. One portion of each of the second and third likeness images 522 and 523.

In addition, based on the touch input, the controller outputs the second likeness image 522 or the third likeness image 523 on the center of the display unit. In FIG. 7D(c), when the continuous touch input that move from left to right on the display unit are applied, the controller controls the display unit in such a manner that the second likeness image 511 is output to the center of the display unit and one portion of the representation image 521 is output to a left region of the second likeness image 522.

In addition, while three images are output on the likeness image, the likeness images are output, in the thumbnail view format, to a lower region of the display unit. That is, the likeness images are output in a size smaller than that of the representation image 521 that is output to the center of the display unit.

That is, the user can recognize the likeness images that are classified as including the common constituent, at a time through thumbnail views, and can be provided with the image larger in size than each of the likeness images.

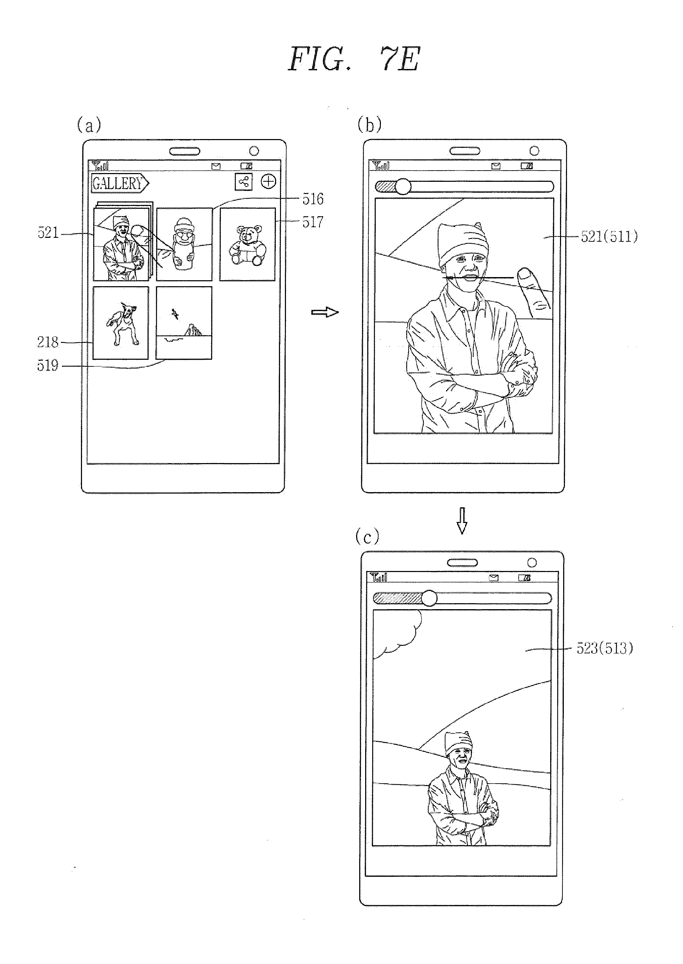

A control method of successively outputting the likeness images is described referring to FIGS. 7E(a) to 7E(c). Referring to 7E(a) and 7E(b), based on the touch that is applied to the representation image 521, the controller controls the display unit in such a manner that the likeness images that are like the representation image 521 are sequentially output. The touch input here is distinguished from the touch input for enlargedly outputting only the representation image 521. For example, the touch input here corresponds to a long touch input.

Referring to FIGS. 7E(b) and 7E(c), based on the continuous touch input that moves in one direction on the display unit in a state where one, among the likeness images, is output (for example, in a state where the representation image 521 is output), the controller controls the display unit in such a manner that the likeness images are sequentially output. That is, the controller outputs the likeness images, corresponding to a range in which the touch input that is applied to the display unit moves. However, the controller controls the display unit in such a manner that sequential switching between the likeness images takes place at predetermined time intervals without applying the touch input.

For example, the controller controls the display unit in such a manner that the likeness images are output according to the chronological order in which the likeness images are obtained or the likeness images are output according to the order in which the likeness images are arranged according to a predetermined reference.

In addition, the display unit outputs a display bar for alerting the user to the number of the likeness images that, among all the likeness images, are output while the likeness images are sequentially output.

In addition, although not illustrated in the drawing, based on the continuous touch input that is applied in the opposite direction, the controller controls the display unit in such a manner that the already-output likeness image is output back.

Accordingly, the user can be provided back with the outputting-limited likeness images.

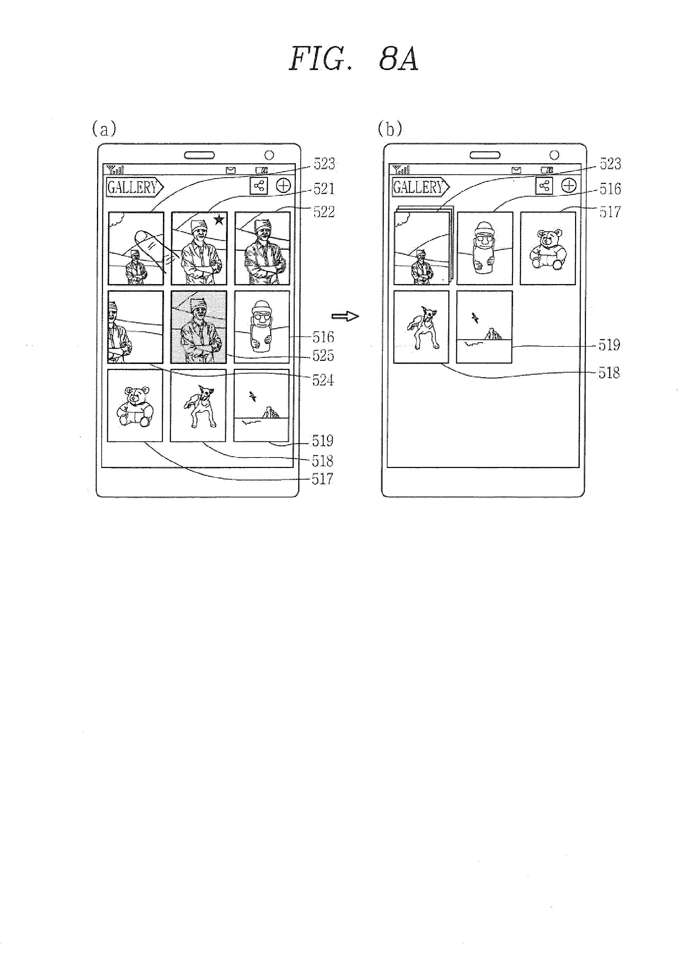

FIGS. 8A(a) to 8A(b) and 8B(a) to 8B(c) are diagrams for describing a control method of changing the representation image.

Referring to FIG. 8A(a) to 8A(b), the display unit outputs the first to fifth images 521, 522, 523, 524, and 525 together. The controller selects one, among the first to fifth likeness images 521, 522, 523, 524, and 525, as the representation image according to a predetermined reference, and selects the first likeness image 521 that has been shared, as the representation image.

However, based on the touch input that is applied to the third likeness image 523, the controller selects the third likeness image 523 as the representation image. At this point, the touch input that is applied to the third likeness image 523 corresponds to a predetermined-type touch input (for example, a long touch input, a double touch input, or the like).

The controller controls the display unit in such a manner that the third likeness image 523 applied to the touch input is selected as the representation image and the outputting of the likeness images that remain after excluding the third likeness image 523 is limited. That is, the controller controls the display unit in such a manner that the third likeness image 523 and the sixth to ninth images 516, 517, 518, and 519 are output together.

Accordingly, the user can check the image that is extracted as the likeness image, and can directly select the representation image that represents the likeness images. In addition, even though the representation image is selected according to the reference, the selected representation image may be changed to another likeness image.

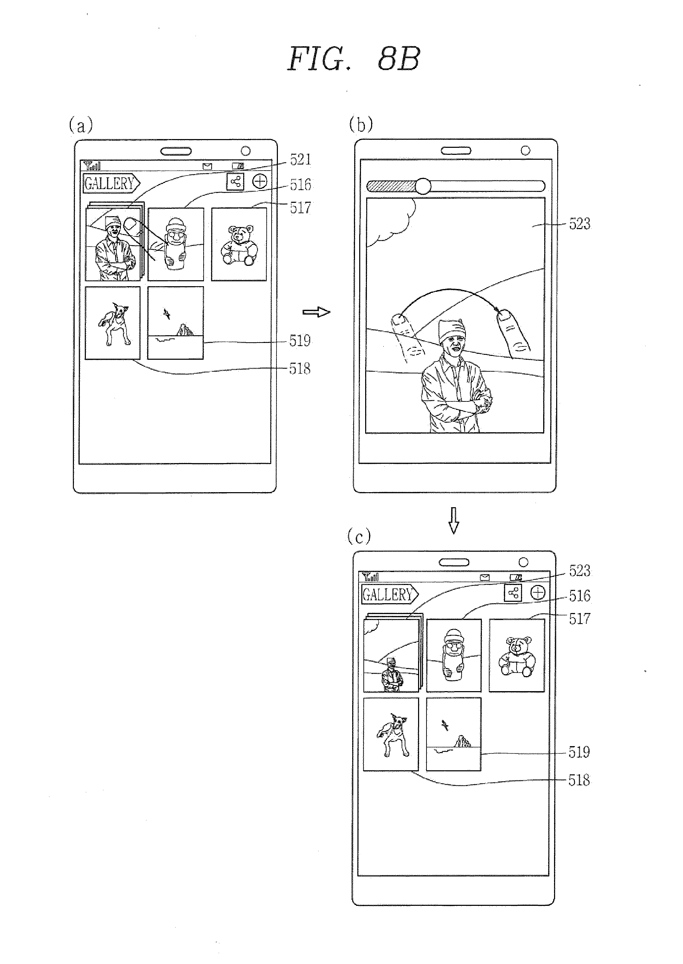

A control method of changing the representation image, according to another embodiment, is described referring to FIGS. 8B(a) to 8B(c). Referring to FIG. 8B(a), the first likeness image 521 that is the representatvie image representing the likeness images, and the other images 516, 517, 518, and 519 are output together on the display unit. Based on the touch input that is applied to the first likeness image 521, the controller controls the display unit in such a manner that the first to fifth likeness images 521, 522, 523, 524, and 525 are sequentially output.

When the touch is applied, the controller switches to the representation image the likeness image that is output on the display unit. Referring to FIG. 8B(b) to 8B(c), based on the touch input that is applied to the display unit while the third likeness image 523 is output, the controller switches the representation image from the first likeness image 521 to the third likeness image 523.

At this point, the touch input that is applied to the display unit in order to change the representation image is distinguished from the touch input that is applied continuously in order to output the likeness images. For example, the touch input for changing the representation image is input in such a manner as to form a predetermined pattern on the display unit.

The controller controls the display unit in such a manner that the third likeness image 523 is output as the new representation image, along with the other images 516, 517, 518, and 519 and the outputting of the likeness images that remain after excluding the third likeness image 523 is limited.

Accordingly, the user can check the likeness image in an enlarged size and can designate a desired likeness image back as the representation image.

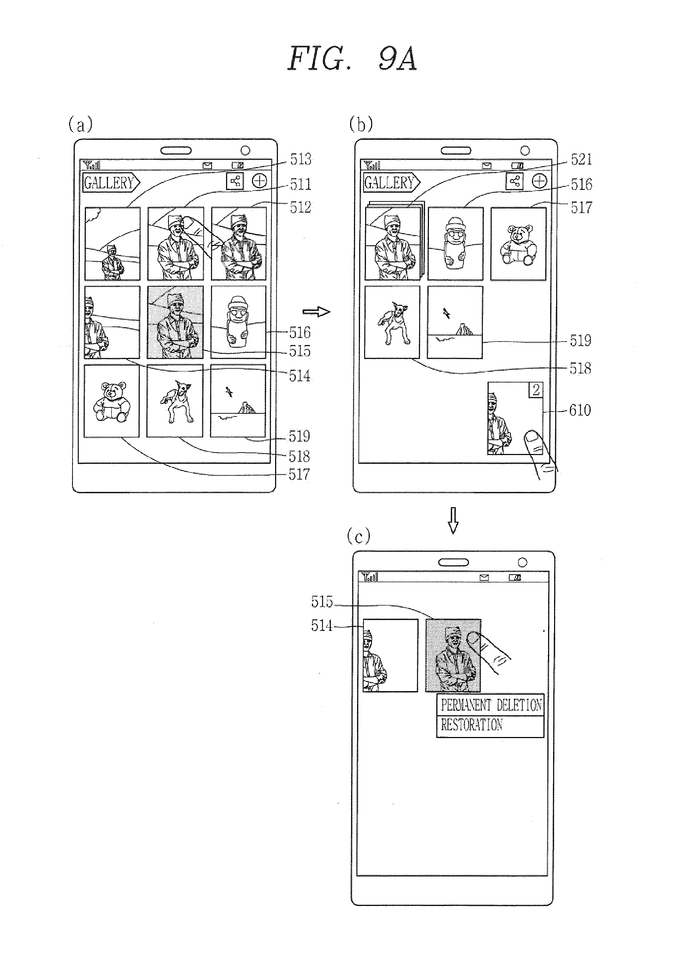

FIGS. 9A(a) to 9A(c), 9B(a) to 9B(b), 9C(a) to 9C(a) and 9C(b), 9D(a) and 9D(b), 9E(a) to 9E(b), 9F(a) to 9F(c), and 9G(a) to 9G(d) are diagrams for describing various control methods of deleting one portion of the likeness image according to various embodiments.

A control method of deleting the likeness image based on a predetermined reference is described referring to FIGS. 9A(a) to 9A(c). The controller extracts the likeness images that include the common constituent, from the images stored in the memory 160. The controller selects the representation image from among the likeness images.

In addition, if the number of the likeness images is greater than a predetermined number, the controller deletes one or more of the likeness images. That is, the controller deletes at least one likeness image in such a manner that the likeness images of which the number is predetermined are stored in the memory 160, and moves the deleted likeness image temporarily to a different storage space.

For example, the predetermined number is 3, when the five likeness images are extracted that includes the common constituent, the controller controls the memory 160 in such a manner that the two likeness images are deleted. The controller selects the two likeness images to be deleted, from among the likeness images, according to a predetermined reference. At this point, the user can define the predetermined reference here.

In addition, the controller controls the display unit in such a manner that a deletion folder 610 in which the deleted likeness image is stored is output. The deletion folder 610 receives the touch input for outputting the deleted likeness images. In addition, at least one, among the deleted images, is displayed on the deletion folder, and the number of deleted likeness images included in the deletion folder 610 is displayed, as an Arabic numeral, on the deleted folder.

Referring to FIGS. 9A(b) and 9A(c), based on the touch input that is applied to the deletion folder 610, the controller controls the display unit in such a manner that at least one deleted likeness image is output. When the touch input is applied to the deleted likeness image, the controller controls the display unit in such a manner that the likeness image is permanently or a menu icon for restoring the deleted likeness image to the memory 160 is output.

In addition, although not illustrated in the drawing, even though the number of the likeness images is a predetermined number or below, the controller deletes the likeness image that satisfies a predetermined deletion condition. For example, the deletion condition corresponds to a case where one portion of a person's face is not photographed, a case where a photographic subject that is shaking is photographed, and the like.

Accordingly, if many of the likeness images are extracted, the unnecessary likeness images are automatically deleted. In addition, the deleted likeness images are recorded in the deletion folder, and therefore the user can check the deleted likeness image through the deletion folder. Therefore, the user can automatically exclude the images that can be replaced with the likeness image.

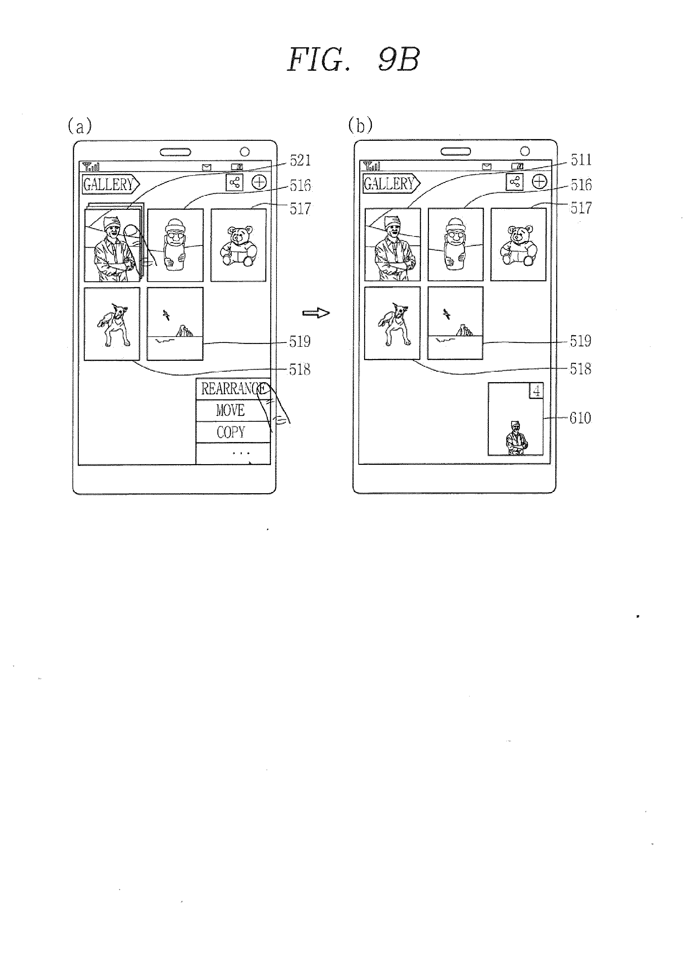

The timing at which the likeness image is deleted is described referring to FIGS. 9B(a) to 9B(b). As described referring to FIGS. 9A(a) to 9A(c), when the likeness image is extracted from the images that are stored in the memory 160, if the number of the extracted likeness images is greater than a predetermined number, the controller selectively deletes the likeness images.

According to the present embodiment, the user can perform control in such a manner that after the likeness images are selected from the images stored in the memory 160 and the outputting of the images that remain after one image is selected as the representation image are limited, at least one likeness image is deleted.

For example, if the representation image 521 and the other images are output to the display unit, when the user applies a control command for "rearranging" the likeness images, the controller deletes at least one or more likeness images.

The controller, as illustrated in FIGS. 9A(a) to 9A(c), leaves out the likeness image of which the number is predetermined and deletes the remaining likeness images. For example, when the touch input for "rearranging" the images is applied, the controller controls the memory 160 in such a manner that the likeness images 511 that remain after the first image 511 is selected as the representation image are deleted.

On the other hand, when the touch input for "rearrange" the images is applied, the controller controls the display unit in such a manner that the images that remain after one image is selected as the representation image 511 are all deleted. Accordingly, the user can be provided with only the high-quality likeness images as necessary, among the likeness images.

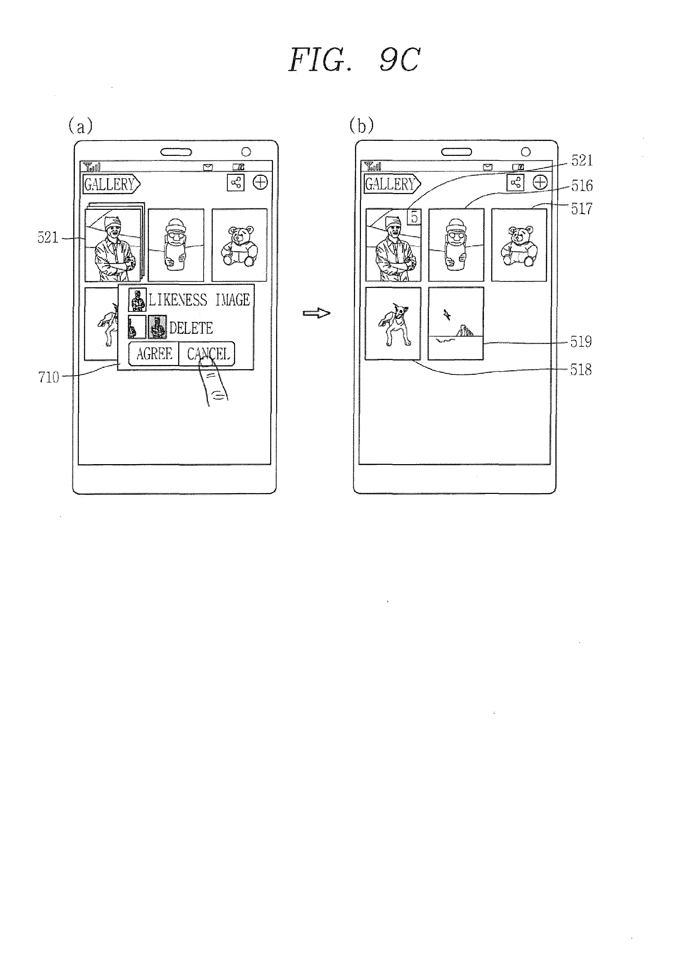

Referring to FIGS. 9C(a) and 9C(b), a control method is described in which an alert is displayed when one or more likeness images are deleted. If at least one image, among the extracted likeness images, is deleted, the controller controls the display unit in such a manner that a first alerting window 710 for alerting the user to the deleted image is output.

The first alerting window 710 includes information relating to the representation image and the likeness image to be deleted. The first alerting window 710 may further include an icon for confirming whether or the likeness image is deleted. When the touch input is applied to a cancellation icon for canceling the deletion of the likeness image, the controller prevents the likeness image from being deleted.

Accordingly, the user can cancel the deletion of the likeness image that is selected as a deletion target according to a predetermined reference whenever necessary, and can confirm the image to be deleted among the stored images, or among the images captured by the camera 121.

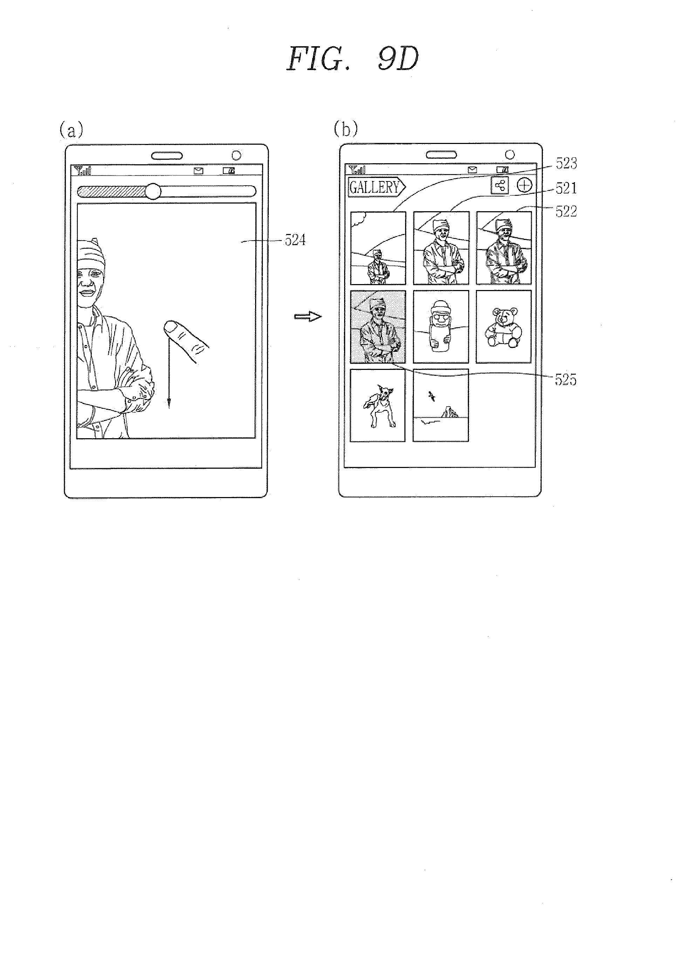

Referring to FIGS. 9D(a) to 9D(b), a control method according to one embodiment is described in which the likeness image is deleted based on the user's intention. The controller outputs the likeness images based on the touch input that is applied to the representation image. That is, the controller sequentially outputs the multiple likeness images based on the touch input that is continuously applied to the display unit. In addition, when the touch input that is defined as a predetermined gesture is applied while the likeness image is output, the controller controls the memory 160 in such a manner that the likeness image is deleted.

Referring to FIGS. 9D(a) and 9D(b), when the touch input that is the predetermined gesture is applied while the fourth likeness image 524 is output on the display unit, the controller controls the memory 160 in such a manner that the fourth likeness image 524 is deleted.

Although not illustrated in the drawings, the controller controls the memory 160 in such a manner that the fourth likeness image 524 is temporarily stored in the deletion folder 610.

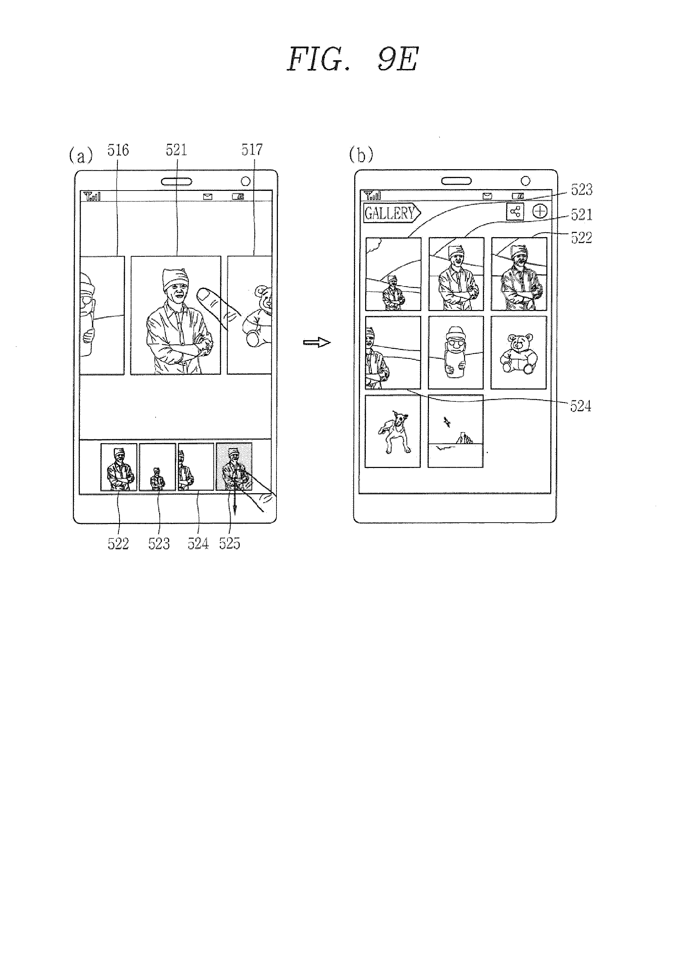

Referring to FIGS. 9E(a) and 9E(b), the first likeness image 521 that is the representation image and the likeness images are output, in the thumbnail view format, to a lower region of the display unit.

The controller deletes at least one likeness image based on the touch input that is applied to the second to fifth likeness images 522, 523, 524, and 525 which are output in the thumbnail view format. For example, the controller controls the memory 160 in such a manner that the fifth likeness image 525 is deleted with the continuous touch input that is applied to the fifth likeness image 525 in one direction (for example, in the direction of the lower region of the display unit).

In addition, the fifth likeness image 525 is deleted on the display unit.

According to the present embodiments, the user can selectively delete the likeness images in a state where the likeness images are provided along with the representation image.

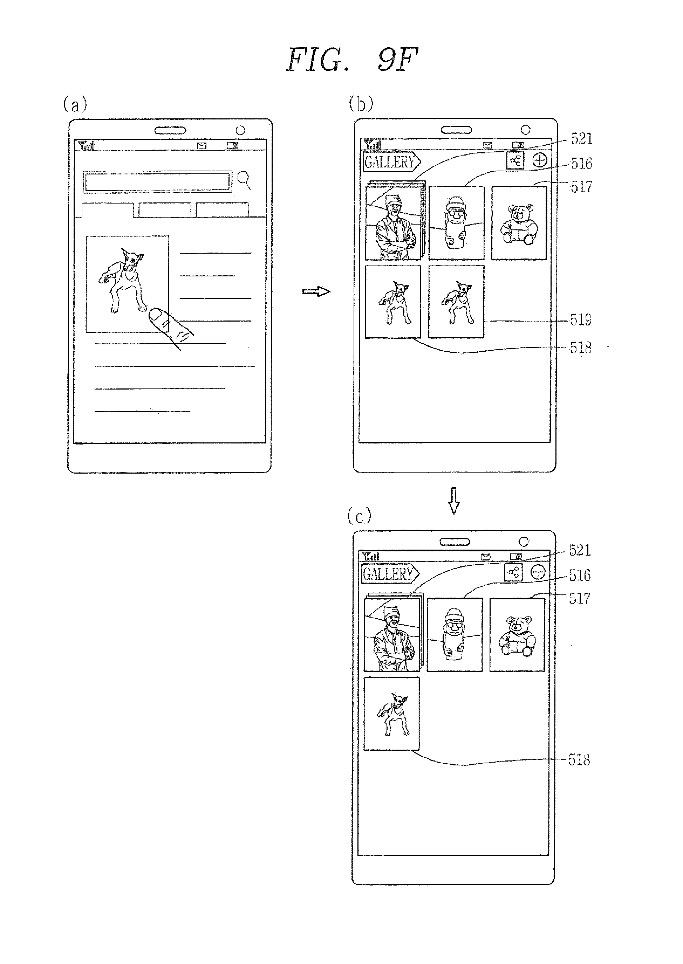

A control method of deleting substantially the same image is described referring to FIGS. 9F(a) to 9F(c). FIG. 9F(a) illustrates the display unit on which a web page including an image is output. The controller stores the image in the memory 160 based on the touch input that is applied to the image. The stored ninth image 519 is output from the web page to the display unit.

The controller searches the memory 160 for the likeness image that has the constituent in common with the ninth image 519 that is stored in the memory 160. When the eighth image 518 that is determined as substantially the same as the ninth image 519 is extracted, the controller controls the memory 160 in such a manner that the eighth image 518 or the ninth image 519 is deleted.

The controller determines whether or not two images are the same, by comparing the two images with each other in terms not only of constituents included in the images, but also of states of the images and processes of obtaining the images.

Accordingly, the user can prevent substantially the same multiple images from being stored redundantly.

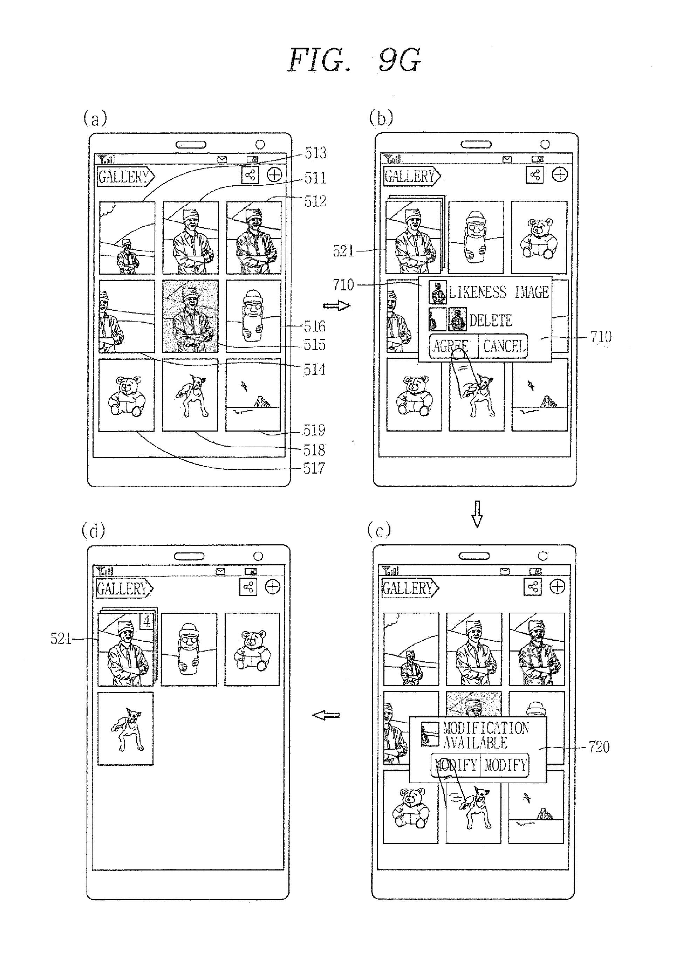

A control method of modifying the image to be deleted is described referring to FIGS. 9G(a) to 9G(d). Referring to FIGS. 9G(a) and 9G(b), the controller deletes one or more of the likeness images. The controller controls the display unit in such a manner that the first alerting window 710 including information relating to the likeness image to be deleted is output.

When the control command to delete the likeness images is received through the first alerting window 710, the controller determines whether or not the likeness images that are deletion targets can be modified. The modification here means technical compensation of the obtained photograph, such as color contrast compensation, brightness compensation, red eye compensation, or the like. The controller determines whether or not quality of each of the likeness images can be improved through the types of compensation described above.

The controller controls the display unit in such a manner that a second alerting window 720 for alerting the user to information on the likeness image that can be modified is output. The second alerting window 720 includes an icon that receives the information on the likeness image that can be modified and that receives the touch input to select whether or not the likeness image is modified.

When the user applies the touch input to a "modification" icon, the controller controls the memory 160 in such a manner that without being deleted, the modified likeness image is stored back as the likeness image associated with the representation image 521.

Accordingly, the user can be provided back with the likeness image that is selected as the deletion target, but is quality-improved by the modification. Furthermore, the modifiable image is prevented from being deleted.

According to the present invention, the controller provides a recommendation folder that is formed by selecting at least one group, among the groups of likeness images, each of which includes the representation image. A method of providing the recommendation folder that is configured from recommendation images which are selected from the likeness images is described.

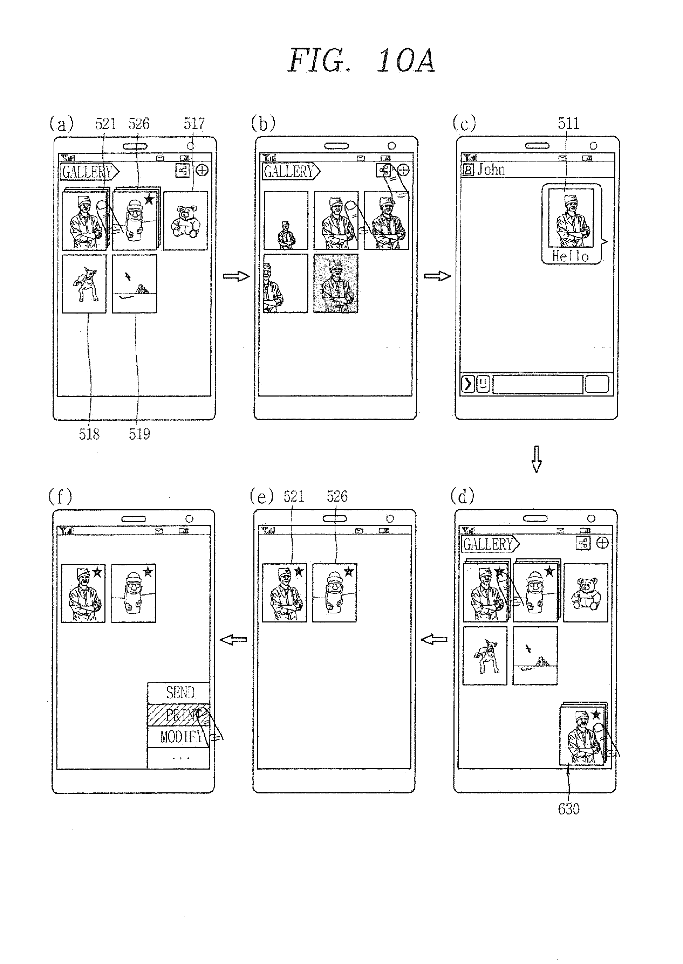

FIGS. 10A(a) to 10A(f) and 10B(a) to 10B(c) are diagrams for describing the recommendation folder that is configured from at least one image.

The recommendation folder is described referring to FIGS. 10A(a) to 10A(f). The first and second images 521 and 526 associated with at least one likeness image and the seventh to ninth images 517, 518, and 519 are output together on the display unit. Referring to FIGS. 10A(a) to 10A(d), based on the user's control command, the controller shares the first image 511 and selects the shared first image 511 as the representation image. For example, a graphic image is further displayed on the shared likeness image on the display unit.

The controller forms a recommendation folder 630 that is configured from the representation images of the multiple groups of likeness images. The controller controls the display unit in such a manner that the representative folder 630 to which the touch input is applied to output the representation images is output. Bases on the touch input that is applied to the recommendation folder 630, the controller controls the display unit that the representation images 521 and 526 of the groups of likeness images are output.

However, the recommendation folder 630 is not limited to the representatvie image representing each group of likeness images. The recommendation folder 630 may further include not only the representatvie image representing each group of likeness images, but also an image that is not the representation image, but is designated by the user, an image in common with the external apparatus, and the like.

Based on the user's control command, the controller prints together the images that are included in the recommendation folder 630. In addition, based on the user's control command, the controller transmits, modifies, or shares the images together.

According to the present embodiment, the user can be provided at a time with the representation images of the groups of likeness images and can perform control at a time on the representation images.

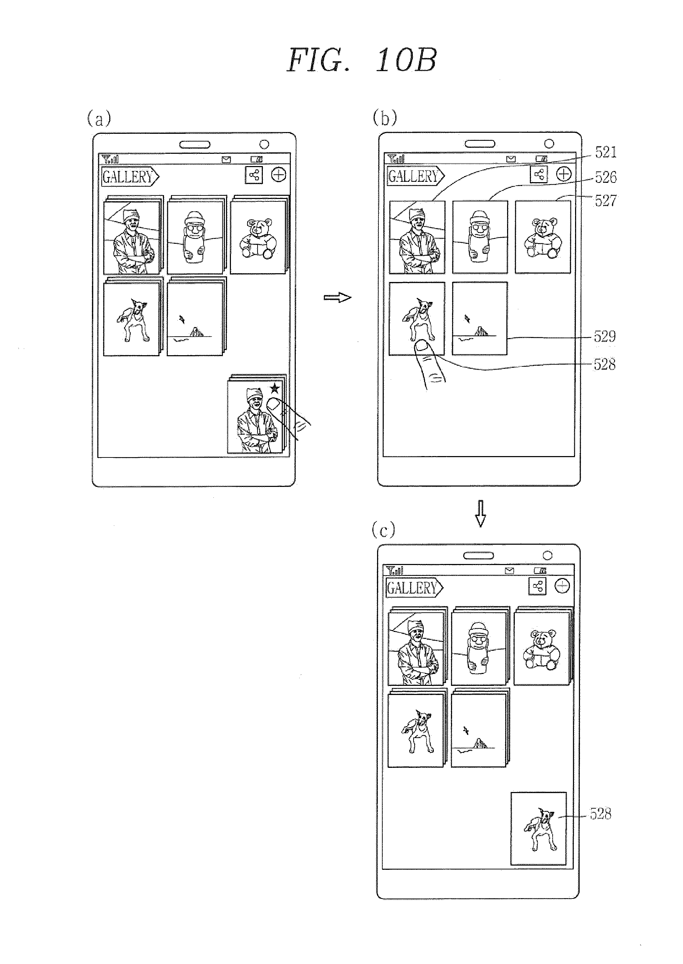

A control method of changing a representative recommendation image of the recommendation folder 630 is described referring to FIGS. 10B(a) to 10B(c). The controller controls the display unit in such a manner that the representative recommendation image that, according to a predetermined reference, is selected from among the multiple images included in the recommendation folder 630 is output.

Based on the touch input that is applied to the recommendation folder 630, the controller controls the display unit in such a manner that the representation images 521, 526, 527, 528, and 529 are output. Based on the touch input that is applied to each of the representation images 521, 526, 527, 528, and 529 that are output together, the controller selects the representative recommendation image. For example, the touch input here corresponds to the long touch input that is applied to the one image.

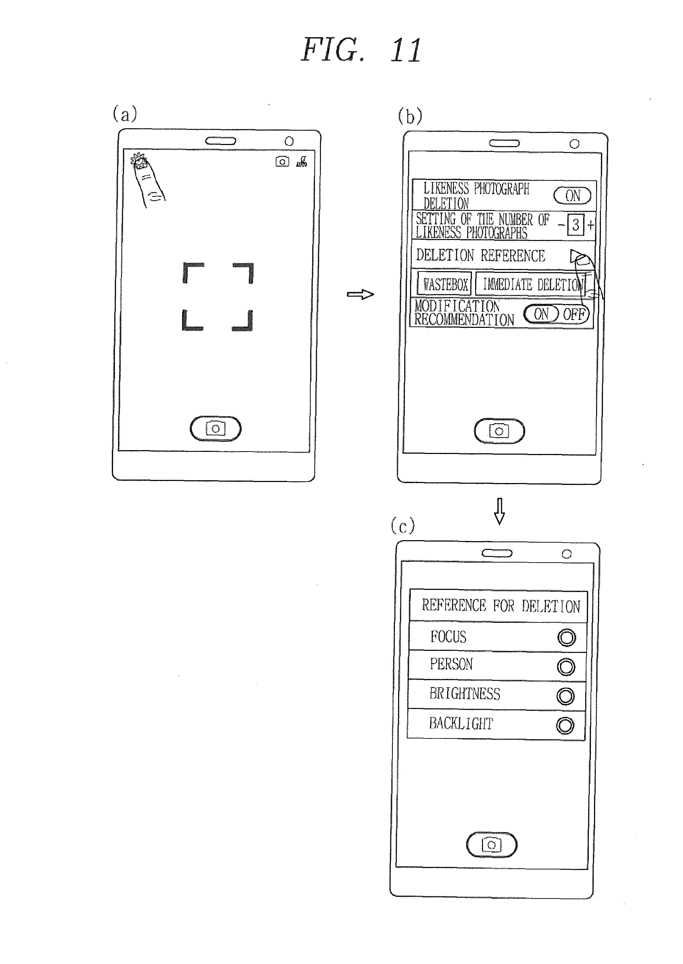

FIGS. 11A to 11C are diagrams for describing setting of a function associated with the extraction of the likeness image while the camera is activated. The user can control the mobile terminal in such a manner that the image obtained by the photographing using the camera 121 is output to one portion of the execution screen of the gallery application and then the likeness images are extracted from the obtained image.

However, the present invention is not limited to this function. While the user obtains images of the external environment using the camera, the images may be analyzed and classified as the likeness images in real time. Generally, like images that are obtained with the camera are stored at approximately the same time by performing photographing control multiple times. Accordingly, when the controller according to the present embodiment analyzes in real time the photographs that is obtain and stored, and then is provided to the user, the already-selected representation image is output to the display unit.

Referring to FIG. 11B, the user can set a function of deleting the like images that are captured in real time and can set the number of stored likeness photographs. In addition, the user can set a function in which the image to be deleted is immediately deleted or is temporarily stored in a wastebasket, and can set a function of recommending the modification of the image to be deleted as well. The user can also set a reference according to which it is determined whether or not the photographs that are analyzed in real time are the deletion targets.

Accordingly, the controller analyzes the images that are obtained by performing the photographing many times, extracts the like image, and automatically deletes the images that does not satisfy the reference. Thus, only the images that are selected according to a predetermined reference are provided to the user, and the already-classified likeness images are provided to the user.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. The mobile terminal comprising:
a memory (160) to store a plurality of images;
a display unit (151) to output the plurality of images;
a controller (180) to extract, from the plurality of images, likeness images (521, 522, 523, 524, and 525) that include a common constituent, to select a representation image (521) from among the likeness images based on a predetermined reference, and to limit outputting of the likeness images that remain after excluding the representation image.

2. The mobile terminal according to claim 1, wherein the common constituent corresponds to at least one of a state of a photographic subject, a state of a background, and a state of an external environment, and
wherein the predetermined reference corresponds to at least one of quality of an image, definition of a photographic subject, and an image forming method.

3. The mobile terminal according to claim 2, wherein the controller selects, as the representative image, the likeness image that is shared with an external terminal or with a virtual space.

4. The mobile terminal according to claim 1, wherein the controller controls the display unit to display a graphic image indicating that the likeness image being similar to the representation image is stored in the memory and is output to the display unit along with the representation image.

5. The mobile terminal according to claim 4, further comprising displaying a graphic image that includes an Arabic numeral to indicate a total number of the extracted likeness images.

6. The mobile terminal according to claim of one of any claims 1 to 5, wherein based on a first touch to the representation image, the controller outputs the representation image in an enlarged manner, and
wherein based on a second touch, different from the first touch, the controller controls the display unit to display at least a portion of the likeness images.

7. The mobile terminal according to claim 6, wherein the controller controls the display unit such that the likeness images are arranged based on the predetermined reference.

8. The mobile terminal according to claim 6, wherein the representation image and the likeness images are simultaneously displayed on the display unitsuch that the likeness images are smaller in size than the representation image.

9. The mobile terminal according to claim 6, wherein based on a third touch to one of the displayed likeness images, the controller selects one of the likeness images as the representation image.

10. The mobile terminal according to claim 6, wherein the memory includes a deletion folder (610) configured to store the likeness images selected for deletion, and
wherein based on the second touch, displaying of one or more of the likeness images in the deletion folder is limited.

11. The mobile terminal according to claim 10, wherein the controller controls the memory such that the likeness image that is moved to the deletion folder is stored in the memory, and
wherein based on a user's command, the controller controls the memory such that at least one or more of the likeness images stored in the deletion folder are permanently deleted.

12. The mobile terminal according to 10, wherein when a total number of the extracted likeness images is greater than a predetermined number, the controller stores, in the deletion folder, one or more of the likeness images that remain after excluding the likeness images, the total number of which is the predetermined number.

13. The mobile terminal according to claim 10, wherein when the likeness image is displayed at the display unit, based on a third touch to the display unit, the controller stores, in the deletion folder (610), the likeness image that is displayed.

14. The mobile terminal according to claim of one of any claims 1 to 13, further comprising:
a camera(121) to obtain at least one image,
wherein the controller to extract from the memory, the likeness image that is similar to the obtained image.

15. A method of controlling a mobile terminal, comprising:
storinga plurality of images;
outputting the plurality of images(521, 522, 523, 524, and 525) at a display unit;
extracting,from the plurality of images, likeness images that include a common constituent; and
selecting, based on a predetermined reference, a representation image from among the likeness images, and limiting outputting of the likeness images that remain after excluding the representation image.
